# EUROPEAN PATENT APPLICATION

(11) **EP 4 834 997 A1**
(43) Date of publication of application: **04.11.2026**
(21) Application number: 24912948.7
(22) Date of filing: 25.12.2024
(51) Int. Cl.: C08L 63/00, C08L 1/08, C09J 101/08, C09J 163/00

(54) **RESIN COMPOSITION**

(30) Priority: 28.12.2023 JP 2023223449
(71) Applicant: Kao Corporation, Tokyo 103-8210 (JP)
(72) Inventor: SAKAI, Rinako, Chuo-ku Tokyo 103-8210 (JP); HATANO, Toru, Chuo-ku Tokyo 103-8210 (JP); YOSHIDA, Yutaka, Chuo-ku Tokyo 103-8210 (JP)
(74) Representative: Hoffmann Eitle
(86) International application number: PCT/JP2024/046021
(87) International publication number: WO 2025/143062

(57) **Abstract**

The resin composition of the present invention contains (A) a modified cellulose fiber, (B) a urethane-modified epoxy resin, and (C) an epoxy resin other than the urethane-modified epoxy resin. The resin composition of the present invention can be used as an adhesive for metal member and the like of a structure, and the resin composition of the present invention can be provided as an adhesive having excellent mechanical strength.

## Description

### TECHNICAL FIELD

The present invention relates to a resin composition.

### BACKGROUND ART

Recently, techniques that are environmentally friendly have been captured spotlight. Under the technical background, materials using cellulose fibers which are biomass abundantly existing in nature have been remarked.

For example, Patent Publication 1 discloses an adhesive composition containing a non-water-soluble resin, and fine cellulose fibers containing an ionic group and/or a fine cellulose fiber composite containing fine cellulose fibers containing an ionic group bound with a modifying group.

In addition, Patent Publication 2 discloses a composition for adhesives, characterized in that the composition contains a fine fibrous cellulose and a matrix resin that satisfy the following conditions (A) to (E):
(A) a number-average fiber diameter being 2 nm or more and 500 nm or less;
(B) an average aspect ratio being 10 or more and 1000 or less;
(C) having a cellulose I crystal structure;
(D) having an anionic functional group; and
(E) a particular polyether amine being bound to a part or all of the anionic functional groups of (D).

Patent Publication 1: Japanese Patent Laid-Open No. 2019-94388
Patent Publication 2: Japanese Patent Laid-Open No. 2018-44097

### SUMMARY OF THE INVENTION

For adhesives, required performances vary depending on physical properties of an object to be adhered.

The present invention relates to provision of a resin composition having excellent mechanical strength, for example, improved extension at a shear adhesion test, when used in an adhesion of a metal member or the like of a structure.

The present invention relates to the following [1] to [20]:
[1] A resin composition containing (A) a modified cellulose fiber, (B) a urethane-modified epoxy resin, and (C) an epoxy resin other than the urethane-modified epoxy resin.
[2] The composition according to the above [1], wherein (A) the modified cellulose fiber has a cellulose I crystal structure, and average fiber diameter thereof is 1 nm or more and 300 nm or less.
[3] The composition according to the above [1] or [2], wherein (A) the modified cellulose fiber is an anionically modified cellulose fiber bound with a modifying group, and the modifying group is a group containing one or more selected from the group consisting of (i) a hydrocarbon group having three or more carbon atoms, (ii) a silicone chain, and (iii) an alkylene oxide chain.
[4] The composition according to the above [3], wherein the modifying group is bound with the anionically modified cellulose fiber at an anionic group via an ionic bond and/or a covalent bond.
[5] The composition according to any one of the above [1] to [4], wherein (C) the epoxy resin other than the urethane-modified epoxy resin is at least one selected from the group consisting of a bisphenol epoxy resin, a rubber-modified epoxy resin, an alicyclic epoxy resin, a glycidyl amine epoxy resin, a polysulfide-modified epoxy resin, a chelate-modified epoxy resin, a tris-phenol methane epoxy resin, a naphthalene epoxy resin, a dicyclopentadiene-modified epoxy resin, an epoxide of an aliphatic polyol or a derivative thereof, a polyether-modified epoxy resin, a polyfunctional aromatic epoxy resin, and a hydrogenated bisphenol epoxy resin.
[6] The composition according to any one of the above [1] to [5], wherein a content of (B) the urethane-modified epoxy resin is 1% by mass or more and less than 80% by mass, and a content of (C) the epoxy resin other than the urethane-modified epoxy resin is 1% by mass or more and less than 80% by mass in the composition.
[7] The composition according to any one of the above [1] to [6], wherein the composition is obtained by mixing a mixture of (A) the modified cellulose fiber and (B) the urethane-modified epoxy resin, and (C) the epoxy resin other than the urethane-modified epoxy resin.
[8] The composition according to any one of the above [1] to [6], wherein the composition is obtained by mixing a mixture of (B) the urethane-modified epoxy resin and (C) the epoxy resin other than the urethane-modified epoxy resin, and (A) the modified cellulose fiber.
[9] The composition according to any one of the above [1] to [6], wherein the composition is obtained by mixing a mixture of (A) the modified cellulose fiber and (C) the epoxy resin other than the urethane-modified epoxy resin, and (B) the urethane-modified epoxy resin.
[10] An adhesive containing a composition as defined in any one of the above [1] to [9].
[11] The adhesive according to the above [10], wherein the adhesive is a structural adhesive.
[12] The adhesive according to the above [10] or [11], further containing a filler other than (A) a modified cellulose fiber.
[13] The adhesive according to any one of the above [10] to [12], wherein the adhesive is used for adhering a vehicle assembly product.
[14] A method of adhering a vehicle assembly product including adhering the vehicle assembly product using an adhesive as defined in any one of the above [10] to [13].
[15] A method of producing a resin composition containing (B) a urethane-modified epoxy resin and (C) an epoxy resin other than the urethane-modified epoxy resin, having:
   Step 1: mixing (A) a modified cellulose fiber and (B) the urethane-modified epoxy resin, and
   Step 2: mixing a mixture obtained in step 1, and (C) the epoxy resin other than the urethane-modified epoxy resin.
[16] A method of producing a resin composition containing (B) a urethane-modified epoxy resin and (C) an epoxy resin other than the urethane-modified epoxy resin, having the following step 3 or step 4:
   Step 3: mixing (A) a modified cellulose fiber, (B) the urethane-modified epoxy resin and (C) the epoxy resin other than the urethane-modified epoxy resin, or
   Step 4: mixing (B) the urethane-modified epoxy resin and (C) the epoxy resin other than the urethane-modified epoxy resin (step 4-1), and mixing the resulting composition and (A) the modified cellulose fiber (step 4-2).
[17] A method of producing a resin composition containing (B) a urethane-modified epoxy resin and (C) an epoxy resin other than the urethane-modified epoxy resin, having:
   Step 5: mixing (A) a modified cellulose fiber and (C) the epoxy resin other than the urethane-modified epoxy resin; and
   Step 6: mixing a composition obtained in step 5 and (B) a urethane-modified epoxy resin.
[18] A method of improving elongation at break of a structural adhesive including mixing (A) a modified cellulose fiber and (B) a urethane-modified epoxy resin.
[19] An adhesive kit containing a container containing an adhesive as defined in any one of the above [10] to [13].
[20] An adhesive kit containing a first container containing a composition as defined in any one of the above [1] to [9], and a second container containing a curing agent.

### DETAILED DESCRIPTION OF THE INVENTION

The present invention can provide a resin composition having excellent mechanical strength when used in an adhesion of a metal member of a structure and the like.

Although the detailed mechanisms in which the rein composition of the present invention exhibits the above effects are not elucidated, they are assumed as follows. Since modified cellulose fibers are present in the interface of an object to be adhered and a resin, adhesiveness of the resin to an adhesion surface is improved, and the extension is improved, even though the smoothness of an adhesion surface of the object to be adhered (for example, metal and/or plastics) is somewhat lowered.

The resin composition of the present invention contains (A) a modified cellulose fiber, (B) a urethane-modified epoxy resin, and (C) an epoxy resin other than the urethane-modified epoxy resin.

### [(A) Modified Cellulose Fiber]

The modified cellulose fiber in the present invention is a cellulose fiber bound with a modifying group having a specified structure. It is preferred that the modifying group is bound with a carboxy group to which a part or all of hydroxy groups of the cellulose fiber or a group at a position C6 (-CH₂OH) of a glucose unit constituting the cellulose fiber is converted to a carboxy group.

### (Anionically Modified Cellulose Fibers)

Cellulose fibers bound with a modifying group are preferably anionically modified cellulose fibers, from the viewpoint of easiness in binding with a modifying group.

The anionically modified cellulose fibers are cellulose fibers having one or more groups selected from the group consisting of anionic groups, e.g., carboxy groups, phosphate (phosphite) group, and sulfonate group, in the molecule. From the viewpoints of easy availability and effects, anionically modified cellulose fibers having a carboxy group as an anionic group are preferred, and anionically modified cellulose fibers in which a group at C6 position of a glucose unit (-CH₂OH) constituting cellulose fibers is selectively converted to a carboxy group (referred to as "oxidized cellulose fibers") are more preferred. Here, the ion pairing the anionic group (counterion) is preferably a proton.

A content of the anionic group in the anionically modified cellulose fibers is preferably 0.1 mmol/g or more, more preferably 0.4 mmol/g or more, even more preferably 0.6 mmol/g or more, even more preferably 0.7 mmol/g or more, and even more preferably 0.8 mmol/g or more, from the viewpoints of stable introduction of the modifying group and increase of adhesive strength by introduction of the modifying group. In addition, the content is preferably 3 mmol/g or less, more preferably 2.5 mmol/g or less, more preferably 2 mmol/g or less, more preferably 1.9 mmol/g or less, even more preferably 1.8 mmol/g or less, more preferably 1.7 mmol/g or less, and even more preferably 1.5 mmol/g or less, from the viewpoint of improving handling properties. Here, "content of the anionic group" means a total amount of anionic groups in the glucose constituting the cellulose fibers, which is specifically measured in accordance with a method described in Examples set forth later.

Binding of the modifying group to the anionically modified cellulose fibers at an anionic group means that a modifying group binds to an anionic group, preferably a carboxy group, owned by the anionically modified cellulose fibers. The binding form of the modifying group with the anionic group includes, for example, an ionic bond and/or a covalent bond. The covalent bond includes, for example, an amide bond, an ester bond, and a urethane bond, and an amide bond is preferred.

Therefore, a preferred embodiment of the modified cellulose fiber of the present invention includes an anionically modified cellulose fiber bound with a modifying group at an anionic group via an ionic bond and/or a covalent bond.

### (Modifying Group)

The modifying group includes a modifying group containing (i) a hydrocarbon group having three or more carbon atoms, (ii) a silicone chain, and (iii) an alkylene oxide chain. These modifying groups may be bound (or introduced) to the cellulose fibers, alone in a single kind, or in combination of two or more kinds.
(i) Hydrocarbon Group Having Three or More Carbon Atoms The hydrocarbon group having three or more carbon atoms include monovalent hydrocarbon groups, for example, linear saturated hydrocarbon groups, linear unsaturated hydrocarbon groups, cyclic saturated hydrocarbon groups, and (heterocyclic) aromatic hydrocarbon groups.

The number of the carbon atoms of the hydrocarbon group is 3 or more, preferably 8 or more, and even more preferably 10 or more, from the viewpoint of increasing adhesive strength when the composition is used as an adhesive, and the number of carbon atoms is preferably 30 or less, more preferably 22 or less, and even more preferably 18 or less, from the same viewpoint. The hydrocarbon group may have a substituent described later, and a part of the hydrocarbon group may be substituted with a hydronitride group.

The linear saturated hydrocarbon group preferably has 3 or more carbon atoms and 30 or less carbon atoms, and specific examples thereof include, for example, a propyl group, an isopropyl group, a butyl group, a *sec*-butyl group, a *tert*-butyl group, an isobutyl group, a pentyl group, a tert-pentyl group, an isopentyl group, a hexyl group, an isohexyl group, a heptyl group, an octyl group, a 2-ethylhexyl group, a nonyl group, a decyl group, a dodecyl group, a tridecyl group, a tetradecyl group, an octadecyl group, a docosyl group, an octacosanyl group, and the like.

The linear unsaturated hydrocarbon group preferably has 3 or more carbon atoms and 30 or less carbon atoms, and specific examples thereof include, for example, a propenyl group, a butenyl group, an isobutenyl group, an isoprenyl group, a pentenyl group, a hexenyl group, a heptenyl group, an octenyl group, a nonenyl group, a decenyl group, a dodecenyl group, a tridecenyl group, a tetradecenyl group, and an octadecenyl group.

The cyclic saturated hydrocarbon group preferably has 3 or more carbon atoms and 20 or less carbon atoms, and specific examples thereof include, for example, a cyclopropyl group, a cyclobutyl group, a cyclopentyl group, a cyclohexyl group, a cycloheptyl group, a cyclooctyl group, a cyclononyl group, a cyclodecyl group, a cyclododecyl group, a cyclotridecyl group, a cyclotetradecyl group, a cyclooctadecyl group, and the like.

The aromatic hydrocarbon group includes, for example, an aryl group, an aralkyl group and the like. The aryl group and the aralkyl group may or may not be substituted with a substituent given later.

The heterocyclic aromatic hydrocarbon group includes an imidazole group.

A total number of the carbon atoms of the aryl group is preferably 6 or more and 24 or less. Specific examples of the aryl group include, for example, a phenyl group, a naphthyl group, an anthryl group, a phenanthryl group, a biphenyl group, a triphenyl group, a terphenyl group, and groups in which these groups are substituted with a substituent given later.

A total number of the carbon atoms of the aralkyl group is preferably 7 or more and 24 or less. Specific examples of the aralkyl group include, for example, a benzyl group, a phenethyl group, a phenylpropyl group, a phenylpentyl group, a phenylhexyl group, a phenylheptyl group, a phenyloctyl group, groups in which these groups are substituted with a substituent given later, and the like.

A total number of the carbon atoms of the imidazole group is preferably 3 or more and 24 or less. Specific examples of the imidazole group include, for example, an imidazole group, a methylimidazole group, an ethylimidazole group, a propylimidazole group, a 2-phenylimidazole group, a benzimidazole group, groups in which these groups are substituted with a substituent, and the like.

### (ii) Silicone Chain

The silicone chain is a monovalent group of which main chain is a siloxane bond, which may further accompany with an alkylene group. The silicone chain may have a substituent given later.

### (iii) Alkylene Oxide Chain

The alkylene oxide chain is a structure containing a (co)polymer of ethylene oxide (EO) and propylene oxide (PO), which is preferably one or more structures selected from the group consisting of a structure containing a polymer of EOs (EO chain), a structure containing a polymer of POs (PO chain), and a structure containing a copolymer in which EO and PO are polymerized in a random or block form ((EO/PO) chain). The alkylene oxide chain may be further bound with the hydrocarbon chain.

The alkylene oxide chain includes, for example, a group represented by the following formula: 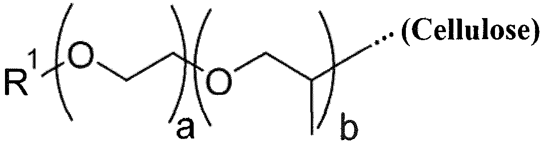 wherein R¹ is a hydrogen atom, a hydrocarbon group having 1 or more carbon atoms and 6 or less carbon atoms, or a -CH₂CH(CH₃)NH₂ group; EO and PO are present in a random or block form; a is 0 or a positive number showing an average number of moles added of EO; b is 0 or a positive number showing an average number of moles added of PO, excepting that both a and b are 0.

The a in the above formula shows an average number of moles added of EO, which is preferably 0 or more, more preferably 1 or more, and even more preferably 2 or more, from the viewpoints of availability and affinity with the resin, and preferably 100 or less, and more preferably 70 or less, from the same viewpoints.

The b in the above formula shows an average number of moles added of PO, which is preferably 0 or more, more preferably 1 or more, and even more preferably 3 or more, from the viewpoint of affinity with the resin, and preferably 50 or less, and more preferably 40 or less, from the viewpoint of availability.

Specific examples of the hydrocarbon group having 1 or more carbon atoms and 6 or less carbon atoms of R¹ of the above formula include a methyl group, an ethyl group, a propyl group, an isopropyl group, a butyl group, a *sec*-butyl group, a *tert*-butyl group, an isobutyl group, a pentyl group, a *tert*-pentyl group, an isopentyl group, a hexyl group, an isohexyl group, and the like.

The formula weight (molecular weight) of the alkylene oxide chain is preferably 500 or more, and more preferably 1,000 or more, and on the other hand, the formula weight is preferably 10,000 or less, and more preferably 7,000 or less. The formula weight of the alkylene oxide chain can be obtained by calculation from an average number of moles added thereof when an amine compound having an alkylene oxide chain given later is produced.

The content ratio (mol%) of PO in the (EO/PO) chain is preferably 1 mol% or more, and more preferably 5 mol% or more, from the viewpoint of increasing adhesive strength, and on the other hand the content ratio is preferably 100 mol% or less, more preferably 95 mol% or less, and even more preferably 90 mol% or less, from the same viewpoint. The content ratio of PO in the (EO/PO) chain can be obtained by calculation from an average number of moles added thereof when an amine compound having an alkylene oxide chain given later is produced.

The alkylene oxide chain may have the following substituents.

### (iv) Further Substituents

Incidentally, the modifying group may further have a substituent. The substituent includes, for example, alkoxy groups having from 1 to 6 carbon atoms, such as a methoxy group, an ethoxy group, a propoxy group, an isopropoxy group, a butoxy group, an isobutoxy group, a *sec-*butoxy group, a *tert*-butoxy group, a pentyloxy group, an isopentyloxy group, and a hexyloxy group; alkoxy-carbonyl groups of which alkoxy group has 1 to 6 carbon atoms such as a methoxycarbonyl group, an ethoxycarbonyl group, a propoxycarbonyl group, an isopropoxycarbonyl group, a butoxycarbonyl group, an isobutoxycarbonyl group, a *sec-*butoxycarbonyl group, a *tert*-butoxycarbonyl group, a pentyloxycarbonyl group, and an isopentyloxycarbonyl group; halogen atoms such as a fluorine atom, a chlorine atom, a bromine atom, and an iodine atom; acyl groups having from 1 to 6 carbon atoms such as an acetyl group and a propionyl group; aralkyl groups; aralkyloxy groups; alkylamino groups having from 1 to 6 carbon atoms; dialkylamino group of which alkyl group has from 1 to 6 carbon atoms; and a hydroxy group.

### [Method for Producing Modified Cellulose Fibers]

The modified cellulose fibers can be produced, for example, by introducing raw material cellulose fibers with an anionic group to produce anionically modified cellulose fibers (step a), and binding the anionically modified cellulose fibers with a modifying group at an anionic group (step b).

### (step a)

### Raw Material Cellulose Fibers

The cellulose fibers which are raw materials for the anionically modified cellulose fibers are preferably natural cellulose, from the environmental viewpoint. The natural cellulose includes, for example, those from wooden pulp such as pulp from needle-leaf trees and pulp from broad-leaf trees; cotton pulp such as cotton linter and cotton lint; non-wooden pulp such as maize straw pulp and bagasse pulp; bacteria cellulose; and the like. These can be used alone or in a combination of two or more kinds.

The average fiber diameter of the raw material cellulose fibers is, but not particularly limited to, preferably 5 µm or more, and more preferably 7 µm or more, from the viewpoints of handling properties and costs, and the average fiber diameter is preferably 500 µm or less, and more preferably 300 µm or less, from the same viewpoints. The average fiber diameter of the raw material cellulose fibers can be measured in accordance with the method described in Examples set forth below.

In addition, the average fiber length of the raw material cellulose fibers is, but not particularly limited to, preferably 5 µm or more, and more preferably 25 µm or more, from the viewpoints of availability and costs, and the average fiber length is preferably 5,000 µm or less, and more preferably 3,000 µm or less, from the same viewpoints. The average fiber length of the raw material cellulose fibers can be measured in accordance with the method described in Examples set forth below.

### Treatment Methods

### (1) A case where the cellulose fibers are introduced with a carboxy group as an anionic group

The method for introducing cellulose fibers with a carboxy group includes, for example, a method of oxidizing a hydroxy group of cellulose fibers to convert the hydroxy group to a carboxy group; and a method of reacting a hydroxy group of cellulose fibers with at least one member selected from the group consisting of compounds having a carboxy group, acid anhydrides of compounds having a carboxy group, and derivatives thereof.

The method of subjecting the cellulose fibers to an oxidization treatment at a hydroxy group includes, for example, a method of reacting the raw material cellulose fibers with an oxidizing agent such as sodium hypochlorite and a bromide such as sodium bromide using 2,2,6,6-tetramethyl-1-piperidine-N-oxyl (TEMPO) as a catalyst, as described in Japanese Patent Laid-Open No. 2015-143336 or Japanese Patent Laid-Open No. 2015-143337. By carrying out oxidation of the cellulose fibers using TEMPO as a catalyst, a group at C6 position of the glucose of the cellulose fiber constituting unit is selectively converted to a carboxy group, whereby the above-mentioned oxidized cellulose fibers can be obtained.

The compound having a carboxy group for use in the introduction of cellulose fibers with a carboxy group is not particularly limited, and specific examples include halogenated acetic acids. The halogenated acetic acid includes chloroacetic acid, and the like.

The acid anhydride of the compound having a carboxy group and derivatives thereof for use in the introduction of cellulose fibers with a carboxy group includes, but not particularly limited to, acid anhydrides of dicarboxylic acid compounds such as maleic anhydride, succinic anhydride, phthalic anhydride, and adipic anhydride; imidation products of the acid anhydrides of a compound having a carboxy group; and derivatives of the acid anhydrides of a compound having a carboxyl group. These compounds may be substituted with a hydrophobic group.

### (2) A case where cellulose fibers are introduced with a sulfonate group or a phosphate (phosphite) group as an anionic group

The method of introducing cellulose fibers with a sulfonate group includes a method of adding sulfuric acid to cellulose fibers and heating, and the like.

The method of introducing cellulose fibers with a phosphate (phosphite) group includes a method of mixing cellulose fibers which are in a dry state or a wet state with a powder or an aqueous solution of phosphoric (phosphorous) acid or a phosphoric (phosphorous) acid derivative; a method of adding an aqueous solution of phosphoric (phosphorous) acid or a phosphoric (phosphorous) acid derivative to a dispersion of cellulose fibers; and the like. When these methods are employed, a dehydration treatment, a heating treatment and the like are generally carried out after mixing or adding a powder or an aqueous solution of phosphoric (phosphorous) acid or a phosphoric (phosphorous) acid derivative.

### (step b)

The introduction of the anionically modified cellulose fibers with a modifying group at an anionic group is accomplished by reacting anionically modified cellulose fibers with a compound for introducing a modifying group at an anionic group (referred to as "compound for modification"). As the method for introduction with a modifying group, (1) in a case of introduction via an ionic bond, Japanese Patent Laid-Open No. 2015-143336 can be referred to, or (2) in a case of introduction via an amide bond, Japanese Patent Laid-Open No. 2015-143337 can be referred to.

After the termination of step b, a post-treatment may be appropriately carried out to remove unreacted compounds and the like. As the method of post-treatment, for example, filtration, centrifugation, dialysis, or the like can be used.

### (1) Embodiment of Introduction via Ionic Bond

In the case of the introduction with a modifying group via an ionic bond, anionically modified cellulose fibers and a compound for modification may be mixed, whereby an ionic bond is formed between an anionic group contained in the anionically modified cellulose fibers and an amino group of the compound for modification.

Specifically, when oxidized cellulose fibers are used as anionically modified cellulose fibers and a primary amine having the above modifying group is used as a compound for modification, the glucose constituting the cellulose fibers can be introduced with a modifying group mentioned above at a carboxy group of position C6 via an ionic bond, as shown in the formula given below: 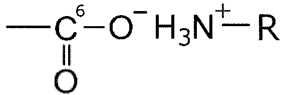 wherein C⁶ is a carbon atom at position 6 of the glucose constituting the cellulose fibers; and R is a modifying group.

### Compound for Modification

The compound for modification used in this embodiment may be any compounds capable of introducing a desired modifying group, which preferably includes amine compounds, phosphonium compounds and further guanidino group-containing compounds having hydrocarbon groups, silicone chains or alkylene oxide chains as mentioned above, and the like.

### Amine Compound

The amine compound is, for example, an amine compound having a hydrocarbon group mentioned above, a silicone chain mentioned above or an alkylene oxide chain mentioned above as a modifying group, in which the anionically modified cellulose fibers are introduced with the hydrocarbon group or the like via an ionic bond, to serve as a modifying group in the modified cellulose fibers.

The amine compound may be any one of primary amines, secondary amines, tertiary amines, and quaternary ammonium compounds. The anionic component of the quaternary ammonium compound preferably includes halogen ions such as chloride ions and bromide ions, hydrogensulfate ions, perchlorate ions, tetrafluoroborate ions, hexafluorophosphate ions, trifluoromethanesulfonate ions, and hydroxy ions, from the viewpoint of reactivities.

### Amine Compound Having Hydrocarbon Group

As specific examples of the amine compound having a hydrocarbon group, the primary to tertiary amines include, for example, diethylamine, triethylamine, propylamine, dipropylamine, butylamine, dibutylamine, hexylamine, 2-ethylhexylamine, dihexylamine, trihexylamine, octylamine, dioctylamine, trioctylamine, dodecylamine, didodecylamine, stearylamine, distearylamine, monoethanolamine, diethanolamine, triethanolamine, oleylamine, aniline, octadecylamine, dimethylbehenylamine, benzylamine, naphthylamine, imidazole, 2-methylimidazole, 2-ethylimidazole, 2-phenylimidazole, 2-ethyl-4-methylimidazole, 2-phenyl-4-methylimidazole, 1-(3-aminopropyl)imidazole, and the like.

The quaternary ammonium compound includes, for example, tetramethylammonium hydroxide (TMAH), tetraethylammonium hydroxide (TEAH), tetraethylammonium chloride, tetrapropylammonium hydroxide (TPAH), tetrabutylammonium hydroxide (TBAH), tetrabutylammonium chloride, lauryltrimethylammonium chloride, dilauryldimethyl chloride, stearyltrimethylammonium chloride, distearyldimethylammonium chloride, cetyltrimethylammonium chloride, and alkylbenzyldimethylammonium chloride.

As the amine compound having a hydrocarbon group, a commercially available product is used, or an amine compound can be prepared according to a known method.

### Amine Compound Having Silicone Chain

The amine compound includes, for example, a compound having a structure in which the backbone of a silicone chain is bound with an amino group via an alkylene group or the like. The amine compound as used herein may be referred to as an "amino-modified silicone." As the amino-modified silicone, a commercially available product is used, or the compound can be prepared in accordance with a known method. The amino-modified silicone may be used alone or in a combination of two or more kinds.

The amino-modified silicone is preferably TSF4703 (kinematic viscosity: 1000, amino equivalent: 1600) and TSF4708 (kinematic viscosity: 1000, amino equivalent: 2800), manufactured by Momentive Performance Materials, Inc.; SS-3551 (kinematic viscosity: 1000, amino equivalent: 1600), SF8457C (kinematic viscosity: 1200, amino equivalent: 1800), SF8417 (kinematic viscosity: 1200, amino equivalent: 1700), BY16-209 (kinematic viscosity: 500, amino equivalent: 1800), BY16-892 (kinematic viscosity: 1500, amino equivalent: 2000), BY16-898 (kinematic viscosity: 2000, amino equivalent: 2900), FZ-3760 (kinematic viscosity: 220, amino equivalent: 1600), manufactured by Dow Corning-Toray Silicone Co., Ltd.; KF8002 (kinematic viscosity: 1100, amino equivalent: 1700), KF867 (kinematic viscosity: 1300, amino equivalent: 1700), KF-864 (kinematic viscosity: 1700, amino equivalent: 3800), BY16-213 (kinematic viscosity: 55, amino equivalent: 2700), BY16-853U (kinematic viscosity: 14, amino equivalent: 450), manufactured by Shin-Etsu Chemical Co., Ltd., from the viewpoint of performance. Within the parentheses ( ), the kinematic viscosity is a measured value at 25°C (units: mm²/s), and the units for the amino equivalent are g/mol.

### Amine Compound Having Alkylene Oxide Chain

It is preferable that an alkylene oxide chain and a nitrogen atom of the amine compound in the amine compound are bound directly or via a linking group. The linking group is preferably a hydrocarbon group, which includes an alkylene group having preferably 1 or more carbon atoms and 6 or less carbon atoms, and more preferably 1 or more carbon atoms and 3 or less carbon atoms. It is preferable that the alkylene group is, for example, an ethylene group and a propylene group.

The amine having an alkylene oxide chain includes, for example, a compound represented by the following formula (i):

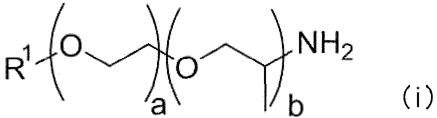

R¹, a and b in the formula (i) are the same as R¹, a and b in the formula showing one example of the alkylene oxide chain mentioned above.

The amine compound having an alkylene oxide chain can be prepared in accordance with a known method. For example, ethylene oxides and propylene oxides may be added in desired amounts to a propylene glycol alkyl ether, then to aminate a hydroxy group terminal. The alkyl ether can be opened with an acid as needed, allowing to form a hydrogen atom at a terminal. As to these production methods, Japanese Patent Laid-Open No. Hei-3-181448 can be referred to, and the details of the amine compound are described, for example, in Japanese Patent Gazette No. 6,105,139.

As the amine compound having an alkylene oxide chain, for example, a commercially available product can be suitably used. The specific examples include Jeffamine M-2070, Jeffamine M-2005, Jeffamine M-2095, Jeffamine M-1000, Jeffamine M-600, Surfoamine B200, Surfoamine L100, Surfoamine L200, Surfoamine L207, Surfoamine L300, Surfoamine B-100, XTJ-501, XTJ-506, XTJ-507, XTJ-508, M3000, Jeffamine ED-900, Jeffamine ED-2003, Jeffamine D-2000, Jeffamine D-4000, XTJ-510, Jeffamine T-3000, Jeffamine T-5000, XTJ-502, XTJ-509, XTJ-510 and the like manufactured by HUNTSMAN, and SUNBRIGHT MEPA-10H, SUNBRIGHT MEPA-20H, SUNBRIGHT MEPA-50H, SUNBRIGHT MEPA-10T, SUNBRIGHT MEPA-12T, SUNBRIGHT MEPA-20T, SUNBRIGHT MEPA-30T, SUNBRIGHT MEPA-40T and the like manufactured by NOF Corporation; and the like. These may be used alone or in a combination of two or more kinds.

### Guanidino Group-Containing Compound

The guanidino group-containing compound is, for example, a guanidine compound having, as a modifying group, a hydrocarbon group mentioned above, a silicone chain mentioned above or an alkylene oxide chain mentioned above, in which the anionically modified cellulose fibers are introduced with a hydrocarbon group or the like via an ionic bond, to serve as a modifying group in the modified cellulose fibers. The guanidino group-containing compound includes diphenyl guanidine, ditolyl guanidine, 1,2,3-triphenyl guanidine, aminoguanidine, and arginine.

### Reaction Conditions and the like

The amount of the compound for modification used is such that the amino groups in the compound for modification, per one mol of carboxy groups owned by the oxidized cellulose fibers, are preferably in an amount of 0.01 mol or more, more preferably in an amount of 0.1 mol or more, even more preferably in an amount of 0.5 mol or more, even more preferably in an amount of 0.7 mol or more, and even more preferably in an amount of 1 mol or more, from the viewpoint of reactivities, and the amount is such that the amino groups are preferably in an amount of 50 mol or less, more preferably in an amount of 20 mol or less, and even more preferably in an amount of 10 mol or less, from the viewpoint of purity of the manufactured product. When the compound for modification has plural amino groups, the compound is used so that a total of the number of moles of amino groups is the number of moles defined above.

During the mixing, it is preferable to use a solvent. As the solvent, it is preferable to select a solvent that dissolves a compound used, including, for example, methanol, ethanol, isopropanol (IPA), N,N-dimethylformamide (DMF), dimethyl sulfoxide (DMSO), N,N-dimethylacetamide, tetrahydrofuran (THF), acetone, methyl ethyl ketone (MEK), cyclohexanone, ethyl acetate, acetonitrile, dichloromethane, chloroform, toluene, acetic acid, 1-methoxy-2-propanol (PGME), water, and the like. These solvents can be used alone in a single kind or in a combination of two or more kinds.

The temperature during the mixing is preferably 0°C or higher, more preferably 5°C or higher, and even more preferably 10°C or higher, from the viewpoint of reactivities of the compound. In addition, the temperature is preferably 50°C or lower, more preferably 40°C or lower, and even more preferably 30°C or lower, from the viewpoint of inhibiting coloration of the modified cellulose fibers. The mixing time can be appropriately set depending upon the compound used and the kinds of the solvent, and the mixing time is preferably 0.01 hours or more, and more preferably 0.1 hours or more, from the viewpoint of reactivities of the compound, and the mixing time is preferably 48 hours or less, and more preferably 24 hours or less, from the viewpoint of productivity.

### (2) Embodiment of Introduction via Amide Bond

In the case of the introduction with a modifying group via an amide bond, anionically modified cellulose fibers and a compound for modification may be mixed in the presence of a known condensing agent, whereby an amide bond is formed between an anionic group contained in the anionically modified cellulose fibers and an amino group of the compound for modification.

Specifically, when oxidized cellulose fibers are used as anionically modified cellulose fibers and a primary amine having the above modifying group is used as a compound for modification, the glucose constituting the cellulose fibers can be introduced with a modifying group mentioned above at a carboxy group of position C6 via an amide bond, as shown in the formula given below: 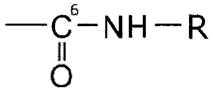 wherein C⁶ is a carbon atom at position 6 of the glucose constituting the cellulose fibers; and R is a modifying group.

### Compound for Modification

The compound for modification used in this embodiment may be any compounds capable of introducing a desired modifying group, which preferably includes amine compounds having hydrocarbon groups, alkylene oxide chains, or silicone chains, as mentioned above.

### Amine Compound

The amine compound is, for example, an amine compound having, as a modifying group, a hydrocarbon group mentioned above, an alkylene oxide chain mentioned above, or a silicone chain mentioned above, in which the anionically modified cellulose fibers are introduced with a hydrocarbon group or the like via an amide bond, to serve as a modifying group in the modified cellulose fibers.

The amine compound includes primary amines and secondary amines. The specific examples of the amine compound include the primary amines and the secondary amines out of the amine compounds having a hydrocarbon group, the amine compounds having an alkylene oxide chain, and the amine compounds having a silicone chain, which are exemplified in "(1) Embodiment of Introduction via Ionic Bond" mentioned above.

### Reaction Conditions

The amount of the compound for modification used is such that the amino groups in the compound for modification, per one mol of carboxy groups owned by the oxidized cellulose fibers, are in an amount of preferably 0.05 mol or more, more preferably 0.1 mol or more, even more preferably 0.2 mol or more, even more preferably 0.3 mol or more, and even more preferably 0.5 mol or more, from the viewpoint of increasing the reactivities and adhesive strength, and the amount is such that the amino groups are preferably in an amount of 50 mol or less, more preferably in an amount of 20 mol or less, and even more preferably in an amount of 10 mol or less, from the viewpoints of purity of the manufactured product and jetting property. When the compound for modification has plural amino groups, the compound is used so that a total of the number of moles of amino groups is the number of moles defined above.

The condensing agent includes, but not particularly limited to, condensing agents described in Gosei Kagaku Shirizu Pepuchido Gosei (Synthetic Chemistry Series Peptide Synthesis) (Maruzen Publishing), page 116, or described in Tetrahedron, 57, 1551(2001), and the like. The condensing agent includes, for example, 4-(4,6-dimethoxy-1,3,5-triazin-2-yl)-4-methylmorpholinium chloride (may be hereinafter referred to as "DMT-MM"), and the like. In addition, it is possible to carry out the reaction with just the heat treatment without using a condensing agent.

In the amidation reaction, a solvent may or may not be used. When a solvent is used, it is preferable to select a solvent that dissolves the compound used, and specific examples of the solvent include solvents that are exemplified in "(1) Embodiment of Introduction via Ionic Bond" mentioned above.

The reaction time and the reaction temperature in the amidation reaction can be appropriately selected depending upon the compound used, the kinds of the solvent, or the like, and the reaction time is preferably from 1 to 24 hours, and more preferably from 10 to 20 hours, from the viewpoint of reaction yield. In addition, the reaction temperature is preferably 0°C or higher, more preferably 5°C or higher, and even more preferably 10°C or higher, from the viewpoint of reactivities. In addition, the reaction temperature is preferably 200°C or lower, more preferably 80°C or lower, and even more preferably 30°C or lower, from the viewpoint of quality of the manufactured product such as coloration.

### (Finely Pulverizing Step)

By finely pulverizing cellulose fibers in any of the steps of the method for producing modified cellulose fibers (for example, before step a, before step b, and after step b), the cellulose fibers of a micrometer scale can be finely pulverized to a size of a nanometer scale. Reducing an average fiber diameter to a nanometer size is preferable because the dispersibility in the resin is improved.

As the finely pulverizing treatment, a known finely pulverizing treatment method can be employed. For example, when modified cellulose fibers of which average fiber diameter is a nanometer size are obtained, a treatment method using a grinder such as Masscolloider, or a treatment method using a high-pressure homogenizer or the like in a medium may be carried out.

The medium is exemplified by, for example, water; alcohols having from 1 to 6 carbon atoms, and preferably from 1 to 4 carbon atoms, such as methanol, ethanol, propanol, and 1-methoxy-2-propanol (PGME); ketones having from 3 to 6 carbon atoms such as acetone, methyl ethyl ketone, and methyl isobutyl ketone; ketones having from 2 to 4 carbon atoms such as ethyl acetate and butyl acetate; saturated hydrocarbons or unsaturated hydrocarbons having from 1 to 6 carbon atoms; aromatic hydrocarbons such as benzene and toluene; halogenated hydrocarbons such as methylene chloride and chloroform; lower alkyl ethers having from 2 to 5 carbon atoms; polar solvents such as N,N-dimethylformamide (DMF), N,N-dimethylacetamide, and dimethyl sulfoxide; and the like. These can be used alone or in a mixture of two or more kinds. The amount of the medium used may be an effective amount that can disperse the modified cellulose fibers, and the amount used, based on the modified cellulose fibers, is preferably 1 time by mass or more, and more preferably 2 times by mass or more, and the amount used is preferably 500 times by mass or less, and more preferably 200 times by mass or less.

As an apparatus to be used in the finely pulverizing treatment, in addition to the high-pressure homogenizer, a known dispersing machine is suitably used. For example, a disintegrator, a beating machine, a low-pressure homogenizer, a grinder, Masscolloider, a cutter mill, a ball-mill, a jet mill, a short shaft extruder, a twin-screw extruder, an ultrasonic agitator, a juice mixer for households, or the like can be used. In addition, the solid ingredient concentration of the modified cellulose fibers in the finely pulverizing treatment is preferably 50% by mass or less.

### [Properties of Modified Cellulose Fibers]

The main properties of the modified cellulose fibers in the present invention are as follows.

### (Crystal Structure)

The modified cellulose fibers have a cellulose I crystal structure, from the viewpoint of increasing the adhesive strength. Here, the cellulose I crystal structure is derived from a raw material cellulose fiber, and preferably a raw material natural cellulose fiber. The crystallinity of the modified cellulose fibers is preferably 10% or more, more preferably 15% or more, and even more preferably 20% or more, from the viewpoint of increasing the adhesive strength. In addition, the crystallinity is preferably 90% or less, more preferably 85% or less, even more preferably 80% or less, and even more preferably 75% or less, from the viewpoint of availability of the raw materials. Here, the crystallinity of the cellulose fibers as used herein refers to a cellulose I crystallinity calculated from the diffraction intensity values in accordance with X-ray diffraction method, which can be measured in accordance with the method described in Examples set forth below. Here, the cellulose I refers to a crystal form of natural cellulose, and the cellulose I crystallinity means a proportion of the amount of crystalline region occupying the entire cellulose fibers. The presence or absence of the cellulose I crystal structure can be judged by the presence of a peak at 20 = 22.6° in the X-ray diffraction measurement.

### (Average Fiber Diameter)

It is preferable that the modified cellulose fibers are subjected to a finely pulverizing treatment to have a nanometer size. Therefore, the average fiber diameter of the modified cellulose fibers is preferably 1 nm or more, and more preferably 2 nm or more, from the viewpoints of handling properties, availability, and costs, and the average fiber diameter is preferably 300 nm or less, more preferably 200 nm or less, even more preferably 150 nm or less, even more preferably 120 nm or less, and still even more preferably 20 nm or less, from the viewpoints of handling properties, dispersibility, and increase in the adhesive strength.

Therefore, an embodiment of the preferred modified cellulose fiber in the present invention includes a modified cellulose fiber having a cellulose I crystal structure, of which average fiber diameter is 1 nm or more and 300 nm or less.

### (Average Fiber Length)

The average fiber length of the modified cellulose fibers is preferably 10 nm or more, more preferably 30 nm or more, and even more preferably 50 nm or more, from the viewpoint of increasing the adhesive strength, and on the other hand, the average fiber length is 1000 nm or less, preferably 800 nm or less, preferably 500 nm or less, more preferably 300 nm or less, and even more preferably less than 150 nm, from the viewpoint of increasing jetting property and elongation at break.

### (Average Aspect Ratio)

The average aspect ratio of the modified cellulose fibers is preferably 5 or more, more preferably 10 or more, and even more preferably 20 or more, from the viewpoint of increasing the adhesive strength, and on the other hand, the average aspect ratio is preferably 300 or less, more preferably 200 or less, even more preferably 150 or less, even more preferably 100 or less, and still even more preferably 70 or less, from the viewpoint of increasing jetting property and adhesive strength.

By having the average fiber length and the average aspect ratio within the above range, the modified cellulose fibers are excellent in adhesiveness of materials having different physical properties (for example, materials having different coefficients of linear expansion) to each other.

The average fiber diameter, the average fiber length, and the average aspect ratio of the modified cellulose fibers are obtained in accordance with the methods described in Examples set forth below.

### (Binding Amount and Introduction Ratio of Modifying Group)

The binding amount of the modifying group in the modified cellulose fibers is preferably 0.01 mmol/g or more, from the viewpoint of increasing the adhesive strength, and the binding amount is preferably 3.0 mmol/g or less, from the same viewpoint. When any two or more kinds of modifying groups are simultaneously introduced as the modifying groups to the modified cellulose fibers, it is preferable that the binding amount of the modifying groups is within the range defined above.

The introduction ratio of the modifying group in the modified cellulose fibers is preferably 10 mol% or more, from the viewpoint of dispersibility, and the higher introduction ratio is more preferred, and the introduction ratio is preferably 100 mol%. When any two or more kinds of modifying groups are simultaneously introduced as the modifying groups, it is preferable that the introduction ratio is within the range defined above, in the range so that a total of the introduction ratios does not exceed the upper limit of 100 mol%.

The binding amount and the introduction ratio of the modifying group can be adjusted by the kinds of a compound for modification and the amount added thereof, a reaction temperature, a reaction time, the kinds of the solvent, or the like. The binding amount, mmol/g, and the introduction ratio, mol%, of the modifying group refer to an amount and a proportion of the modifying group introduced (bound) to an anionic group in the modified cellulose fibers. The binding amount and the introduction ratio of the modifying group in the modified cellulose fibers are calculated in accordance with the methods described in Examples set forth below, for example, in a case where an anionic group is a carboxy group.

### [Resin]

The resin in the resin composition of the present invention includes (B) a urethane-modified epoxy resin and (C) an epoxy resin other than the urethane-modified epoxy resin, and the resin composition of the present invention may contain resins of (B) component and (C) component.

The urethane-modified epoxy resin of (B) component may be a resin having a urethane bond and two or more epoxy groups in a molecular.

For example, a resin obtained by reacting a compound having a urethane bond obtained by an addition reaction of a polyhydroxy compound having a hydroxy group (polyether polyol, polyester polyol, polybutadiene polyol, polyolefin polyol, an adduct of hydroxycarboxylic acid and alkylene oxide, and the like) and a polyisocyanate compound having an isocyanate group (trilene diisocyanate, diphenylmethane diisocyanate, naphthalene diisocyanate, and the like), and a bisphenol epoxy resin (an epoxy compound having a hydroxy group) is used.

As a urethane-modified epoxy resin, a commercially available product may be used, and the commercially available product includes, for example, ADEKA RESIN EPU series manufactured by ADEKA CORPORATION, and EPOKY^{™} series manufactured by Mitsui Chemicals, Inc.

The preferable viscosity range of the urethane-modified epoxy resin of (B) component is preferably 1,000 mPa·/ 25°C or more, more preferably 3,000 mPa·/ 25°C or more, and even more preferably 5,000 mPa·/ 25°C or more, from the viewpoint of inhibiting leak after application, and on the other hand the viscosity range is preferably 1,000,000 mPa·/ 25°C or less, more preferably 750,000 mPa·/ 25°C or less, and even more preferably 500,000 mPa·/ 25°C or less, from the viewpoints of applicability and jetting property.

In addition, the preferable range of an epoxy equivalent of the urethane-modified epoxy resin of (B) component is preferably 100 g/equivalent or more, more preferably 125 g/equivalent or more, and even more preferably 150 g/equivalent or more, from the viewpoint of being capable of forming a cured product having excellent adhering ability, and on the other hand the range of the epoxy equivalent is preferably 500 g/equivalent or less, more preferably 400 g/equivalent or less, and even more preferably 350 g/equivalent or less, from the viewpoint of exhibition of mechanical strength of the cured product.

The "epoxy resin other than the urethane-modified epoxy resin" of (C) component is an epoxy resin not falling under the above (B) component among epoxy resins in the field of the present invention.

More specifically, the epoxy resin of (C) component includes at least one selected from the group consisting of a bisphenol epoxy resin, a rubber-modified epoxy resin, an alicyclic epoxy resin, a glycidyl amine epoxy resin, a polysulfide-modified epoxy resin, a chelate-modified epoxy resin, a tris-phenol methane epoxy resin, a naphthalene epoxy resin, a dicyclopentadiene-modified epoxy resin, an aliphatic epoxy resin such as an epoxide of an aliphatic polyol or a derivative thereof, a polyether-modified epoxy resin, a polyfunctional aromatic epoxy resin, and a hydrogenated bisphenol epoxy resin. Here, the alicyclic epoxy resin includes a glycidyl eater epoxy resin, a glycidyl amine epoxy resin, a phenol novolac epoxy resin, an alicyclic epoxy resin having an ester scaffold and the like. Further, the epoxy resin of (C) component includes an epoxy resin which is a cyclohexane epoxy resin, a cyclohexane dimethanol epoxy resin, a glycidyl amine epoxy resin, and an epoxide of a polybutadiene polyol, and the like. As used herein, the resin is referred to as "generalized epoxy resin." Among them, an aliphatic epoxy resin is preferable, a bisphenol epoxy resin is more preferable, one or more selected from a bisphenol A epoxy resin, bisphenol F epoxy resin and bisphenol S epoxy resin is even more preferable, and a bisphenol A epoxy resin is even more preferable, from the viewpoint of improving adhesion strength and tensile strength.

The specific examples of generalized epoxy resin include, for example, jER807, jER828, jER828US, jER828EL, jER825, jER630, jER630LSD, and the like manufactured by Mitsubishi Chemical Corporation; ADEKA RESIN EP-4100, ADEKA RESIN EP-4300E, ADEKA RESIN EP-4400, ADEKA RESIN EP-4901E, ADEKA RESIN EP-4000, ADEKA RESIN EP-4000S, ADEKA RESIN EP-4005, ADEKA RESIN EPR-1415-1, ADEKA RESIN EPR-2000, ADEKA RESIN EPR-2007, ADEKA RESIN EP-49-10N, ADEKA RESIN EP-49-10P2, ADEKA RESIN EP-49-23, and the like manufactured by ADEKA CORPORATION; FLEP-50, FLEP-60, and the like manufactured by Toray Fine Chemicals Co., Ltd.; Epolite 40E, Epolite 100E, Epolite 200E, Epolite 400E, Epolite 70P, Epolite 200P, Epolite 400P, Epolite 1500NP, Epolite 1600, Epolite 80MF, Epolite 4000, Epolite 3002(N), and the like manufactured by Kyoeisha Chemical Co., Ltd.; and DENACOL EX-201, DENACOL EX-201-IM, DENACOL EX-252, DENACOL EX-991L, and the like manufactured by Nagase ChemteX Corporation. These may be used alone or in a combination of two or more kinds.

The preferred viscosity range of the generalized epoxy resin is preferably 1,000 mPa·/ 25°C or more, more preferably 3,000 mPa·/ 25°C or more, and even more preferably 5,000 mPa·/ 25°C or more, from the viewpoint of inhibiting leak after application, and on the other hand, the preferred viscosity range is preferably 1,000,000 mPa·/ 25°C or less, more preferably 750,000 mPa·/ 25°C or less, and even more preferably 500,000 mPa·/ 25°C or less, from the viewpoints of applicability and jetting property.

Further, an epoxy diluent having an epoxy group which is known as a reactive diluent also can be employed as an epoxy resin of (C) component. Since the reactive diluent has lower viscosity than that of (C) component mentioned above, viscosity of the resin composition can be decreased by formulating the reactive diluent in a proper amount.

The specific examples of the reactive diluent include monofunctional n-butanol glycidyl ether, butyl glycidyl ether, butyl phenyl glycidyl ether, hexyl glycidyl ether, 2-ethyl hexyl glycidyl ether, allyl glycidyl ether, tetrahydro furfuryl glycidyl ether, furfuryl glycidyl ether, trimethoxy silyl glycidyl ether, other higher alcohol glycidyl ether, glycidyl methacrylate and the like, and multifunctional 1,4-butanediol diglycidyl ether, 1,6-hexanediol diglycidyl ether, trimethylolpropane triglycidyl ether, polyethylene glycol diglycidyl ether, polypropylene glycol glycidyl ether, dimeric acid diglycidyl ester and the like. The preferred viscosity range of these reactive diluents is preferably 15 mPa·/ 25°C or more, more preferably 20 mPa·/ 25°C or more, and even more preferably 30 mPa·/ 25°C or more, from the viewpoint of capability of forming a cured product having excellent adhering property, and on the other hand, the preferred viscosity range is preferably 3,000 mPa·/ 25°C or less, more preferably 2,000 mPa·/ 25°C or less, and even more preferably 1,000 mPa·/ 25°C or less, from the viewpoint of handling property.

The reactive diluent is commercially available, and the reactive diluent includes, for example, ADEKA GLYCIROL ED-503, ADEKA GLYCIROL ED-503G, ADEKA GLYCIROL ED-506, ADEKA GLYCIROL ED-523T, ADEKA GLYCIROL ED-505 and the like manufactured by ADEKA CORPORATION.

As (C) component, the generalized epoxy resin and the reactive diluent may be used in combination, and as a ratio of the both in the case of combination use, the reactive diluent is preferably 1 part by mass or more, more preferably 3 parts by mass or more, and even more preferably 5 parts by mass or more, based on 100 parts by mass of generalized epoxy resin, from the viewpoints of applicability and jetting property, and on the other hand, the reactive diluent is preferably 50 parts by mass or less, more preferably 40 parts by mass or less, and even more preferably 30 parts by mass or less, from the viewpoints of inhibiting leak after application and capability of forming a cured product having excellent adhesiveness.

A filler known in the art of the present invention can be formulated to adjust viscosity, and improve mechanical properties after curation of the composition of the present invention. The filler is exemplified by a filler other than (A) a modified cellulose fiber, for example, calcium carbonate, talc, magnesia, calcium silicate, calcium hydroxide, aluminum hydroxide, magnesium hydroxide, alumina, zircon, graphite, barium sulfate, mica, kaolin, wollastonite, clay, mica, feldspar, syenite, chlorite, bentonite, montmorillonite, barite, cristobalite, dolomite, quartz, diatomite, aluminum silicate, barium carbonate, magnesium carbonate, zinc carbonate, mineral fiber, textile fiber, glass fiber, aramid pulp, boron fiber, carbon fiber, phosphate, silica such as crystalline silica, amorphous silica, fused silica, fumed silica, pyrogenic silica, precipitated silica, finely pulverized powder silica, silica sand, agalmatolite, cement, resin powder such as polyethylene, calcium oxide, ferric oxide, zinc oxide, titanium oxide, barium oxide, magnesium oxide, titanium dioxide, hollow inorganic beads such as hollow ceramic beads and hollow glass beads, hollow organic beads made by polyester resin or the like, glass beads, metal powder, bituminous material, and the like. These may be used alone or in a combination of two or more kinds.

Besides, various additives, for example, a curing agent and a curing accelerator, a reaction retardant, an anti-aging agent, an antioxidant, a pigment, a dye, a plasticizer, a silane coupling agent, a tackifier, a flame retardant, an antistatic agent, an ultraviolet absorber, a surfactant, a dispersant, a dehydrating agent, a thermos-curable resin and a thermoplastic resin other than an epoxy resin, and the like can be properly used in combination, depending on needs.

As the curing agent or the curing accelerator, an agent generally used for curation of an epoxy resin can be widely used. The curing agent includes a dicyandiamide, an acid anhydride, a phenol resin curing agent, a polyamine compound, a polymercaptan compound, an isocyanate compound, organic acids and the like, and in the present invention, one or more selected from a dicyandiamide, an acid anhydride, a polyamine compound and a polymercaptan compound are preferred, from the viewpoint of storage stability.

The dicyandiamide is represented by H₂N-C(NH₂)=N-CN, and has a usual melting point of from 205°C to 215°C, and from 207°C to 212°C in ones having high purity.

As the acid anhydride, an acid anhydride of unsaturated dicarboxylic acid having an unsaturated bond capable of causing radical polymerization is preferred, one or more selected from an aromatic acid anhydride, a cyclic aliphatic acid anhydride and an aliphatic acid anhydride is more preferred, and an acid anhydride which is liquid at 25°C is even more preferred.

The specific example of the acid anhydride includes acid anhydride of fumaric acid, maleic acid, succinic acid, dodecenylsuccinic acid, tetrahydrophthalic acid, methyl tetrahydrophthalic acid, hexahydrophthalic acid, methyl hexahydrophthalic acid, itaconic acid, and citraconic acid and the like, and preferably acid anhydride of maleic acid, tetrahydrophthalic acid, tetrahydrophthalic acid, hexahydrophthalic acid and methyl hexahydrophthalic acid, and the acid anhydride is more preferably one or more selected from tetrahydrophthalic acid anhydride, tetrahydrophthalic acid anhydride, methyl tetrahydrophthalic acid anhydride, hexahydrophthalic acid anhydride and methyl hexahydrophthalic acid anhydride. The organic phosphorous compound includes triphenylphosphine and the like, and a quaternary ammonium salt includes tetra ethyl ammonium bromide, tetra butyl ammonium bromide and the like.

The quaternary phosphonium salt includes tetrabutylphosphonium decanoate, tetrabutylphosphonium laurate, tetrabutylphosphonium myristate, tetrabutylphosphonium palmitate, and a salt of tetrabutylphosphonium cation and an anion such as bicyclo[2.2.1]heptane-2,3-dicarboxylic acid, methyl bicyclo[2.2.1]heptane-2,3-dicarboxylic acid, 1,2,4,5-cyclohexane tetracarboxylic acid, methanesulfonic acid, benzenesulfonic acid, p-toluenesulfonic acid, 4-chlorobenzenesulfonic acid, and dodecylbenzenesulfonic acid, and the like.

The organic metal salt includes tin octylate, zinc octylate, dibutyltin dilaurate, aluminum acetylacetonate and the like, and the boron compound includes boron trifluoride, triphenyl borate and the like.

These acid anhydrides can be used alone or in a mixture of two or more kinds.

The polyamine compound includes a diamine compound, a triamine compound and the like, and one or more selected from aliphatic diamine, aromatic diamine and alicyclic amine are preferred.

The polymercaptan compound includes polyhydric alcohol ester of mercapto carboxylic acid, monomercaptan monohydric alcohol ester containing polycarboxylic acid, a compound having a mercaptan group at a terminal of polypropylene glycol or polyethylene glycol chain, other ester-containing polymercaptan described in United States Patent No. 4,126,505, propoxylated ether polythiol described in United States Patent No. 4,092,293, a polymercaptan-containing resin having molecular weight of from 750 to 7000 described in United States Patent No. 3,258,495, dimercapto polysulfide polymer described in United States Patent No. 2,919,255, thiolated oligomer triglyceride, and the like.

Among them, polyhydric alcohol ester of mercapto carboxylic acid is preferred.

The polyhydric alcohol ester of mercapto carboxylic acid preferably includes, for example, trimethylolpropane trimercapto propionate, trimethylolpropane trithio gluconate, pentaerythritol tetramercapto propionate, pentaerythritol tetrathio gluconate, trimethylolethane trimercapto propionate, and the like.

The curing accelerator can be properly selected depending on the kinds of the curing agent, and the curing accelerator of dicyandiamide includes ureas, imidazoles, Lewis acid catalysts, and the like. Among them, ureas are preferably used. The ureas include 3-(3,4-dichlorophenyl)-1,1-dimethylurea (DCMU), toluene bis(dimethylurea), 4,4'-methylene bis(phenyldimethylurea), 3-phenyl-1,1-dimethylurea, dichlorodimethylurea, phenyldimethylurea and the like.

As the curing accelerator of the acid anhydride, a tertiary amine, a tertiary amine salt, imidazoles, an organic phosphorous compound, a quaternary ammonium salt, a quaternary phosphonium salt, an organic metal salt, a boron compound and the like can be used.

### [Resin Composition of Present Invention]

The amount of the resin in the composition of the present invention is converted to a formulated amount, and the amount is preferably 10% by mass or more, and preferably 97% by mass or less, from the viewpoint of increasing adhesion strength.

When a filler is not contained, the amount of the resin is converted to a formulated amount, and the amount is preferably 50% by mass or more, more preferably 60% by mass or more, and even more preferably 70% by mass or more, from the viewpoint of increasing adhesion strength, and on the other hand, the amount is preferably 95% by mass or less, and more preferably 92% by mass or less, from the viewpoint of costs.

When a filler is contained, the amount of the resin is converted to a formulated amount, and the amount is preferably 10% by mass or more, more preferably 20% by mass or more, and even more preferably 30% by mass or more, from the viewpoint of increasing adhesion strength, and on the other hand, the amount is preferably 95% by mass or less, more preferably 80% by mass or less, and even more preferably 70% by mass or less, from the viewpoint of costs.

As a combination of the content of (B) component and the content of (C) component in the composition of the present invention, preferably, the content of (B) component is 1% by mass or more and less than 80% by mass, and the content of (C) component is 1% by mass or more and less than 90% by mass, from the viewpoint of satisfying both of adhesion strength and tensile strength.

When a filler is not contained, more preferably, the content of (B) component is 5% by mass or more and 65% by mass or less, and the content of (C) component is 35% by mass or more and less than 85% by mass, and even more preferably the content of (B) component is 10% by mass or more and 60% by mass or less, and the content of (C) component is 40% by mass or more and 80% by mass or less, from the above viewpoint.

When a filler is contained, more preferably, the content of (B) component is 3% by mass or more and 55% by mass or less, and the content of (C) component is 15% by mass or more and less than 55% by mass, and even more preferably, the content of (B) component is 5% by mass or more and 45% by mass or less, and the content of (C) component is 20% by mass or more and 50% by mass or less, from the above viewpoint.

A content ratio of (C) component to (B) component [(C) / (B)] in the composition of the present invention is preferably 0.4 or more and 15 or less, more preferably 0.5 or more and 12 or less, and even more preferably 0.6 or more and 10 or less, from the viewpoint of satisfying both of adhesion strength and tensile strength.

A mass ratio of cellulose fiber / Component (B) in the composition of the present invention is converted to a formulated amount, and the mass ratio is preferably 0.001 or more, more preferably 0.005 or more, and even more preferably 0.01 or more, from the viewpoint of increasing an elongation at break, and on the other hand, the mass ratio is preferably 10 or less, more preferably 5 or less, even more preferably 3 or less, even more preferably 1.0 or less, even more preferably 0.5 or less, even more preferably 0.10 or less, from the viewpoint of viscosity.

A mass ratio of cellulose fiber / resin in the composition of the present invention is converted to a formulated amount, and the mass ratio is preferably 0.01/100 or more, more preferably 0.05/100 or more, even more preferably 0.1/100 or more, even more preferably 0.3/100 or more, and even more preferably 0.5/100 or more, from the viewpoint of increasing adhesion strength, and on the other hand, the mass ratio is preferably 30/100 or less, more preferably 20/100 or less, even more preferably 15/100 or less, even more preferably 10/100 or less, even more preferably 7/100 or less, even more preferably 5/100 or less, from the viewpoint of viscosity.

Here, the mass of the cellulose fiber as used herein refers to a mass of a moiety of the modified cellulose fiber in which a modifying group is excluded, i.e. a moiety of the cellulose fiber.

When the composition of the present invention contains a curing agent and/or a curing accelerator, the preferred amount of the curing agent is not unconditionally referred because the amount is adjusted depending on the use environment (heating temperature, heating time) of an adhesive or an influence of other compositions, and the amount of these components is considered as a total amount of the both and converted to a formulated amount, and the amount is preferably 0.5 parts by mass or more, and more preferably 1 part by mass or more, and on the other hand, the amount is preferably 80 parts by mass or less, and more preferably 70 parts by mass or less, based on 100 parts by mass of the resin.

When the composition of the present invention contains a filler, the amount is converted to a formulated amount, and the amount is preferably 5 parts by mass or more, more preferably 15 parts by mass or more, and even more preferably 30 parts by mass or more, from the viewpoint of costs, and on the other hand, the amount is preferably 90 parts by mass or less, more preferably 80 parts by mass or less, and even more preferably 70 parts by mass or less, from the viewpoint of strength, based on 100 parts by mass of the resin.

Viscosity of the composition of the present invention is preferably 1,000 mPa·s / 25°C or more, more preferably 3,000 mPa·s / 25°C or more, and even more preferably 5,000 mPa·s / 25°C of more, from the viewpoint of inhibiting leak after application, and on the other hand, the viscosity is preferably 1,000,000 mPa·s / 25°C or less, more preferably 750,000 mPa·s / 25°C or less, and even more preferably 500,000 mPa·s / 25°C or less, from the viewpoints of applicability and jetting property.

Here, the above viscosity is measured in the measuring condition of 1s⁻¹ of shear rate in accordance with JIS-K2220.

The resin composition of the present invention may further contain a solvent, and the viscosity of the resin composition can be controlled to a desired degree by using the solvent.

The solvent which can be used includes, for example, dimethylformamide, ethyl acetate, methyl methacrylate, ethanol, isopropanol, N,N-dimethylformamide (DMF), dimethyl sulfoxide (DMSO), N,N-dimethyl acetamide , tetrahydrofuran (THF), diester of succinic acid and triethylene glycol monomethyl ether, acetone, methyl ethyl ketone (MEK), acetonitrile, dichloromethane, chloroform, toluene, 1-methoxy-2-propanol (PGME), acetic acid and the like, and these can be used alone or in combination of two or more kinds.

When the solvent is used, the amount is, for example, preferably 50 parts by mass or more, and more preferably 100 parts by mass or more, and on the other hand, the amount is preferably 5000 parts by mass or less, and more preferably 2000 parts by mass or less, based on 100 parts by mass of the resin.

### [Production Method of Resin Composition]

The resin composition of the present invention can be produced, for example, by mixing the modified cellulose fiber, the above-mentioned resin and the like. Further, the solvent, the curing agent and the other components can be optionally mixed according to needs.

When a filler is optionally formulated, the method can have step α after a step of mixing the modified cellulose fiber, the resin and the like: Step α: adding a filler and mixing the components.

When the adhesive is used as one-component adhesive, the method can further have the following step A and step B after the step of mixing the modified cellulose fiber, the resin and the like or after the step α in the case where a filler is optionally formulated:
Step A: adding a curing agent and/or a curing accelerator and mixing the contents, and
Step B: adding a reactive diluent and mixing the contents.

The method of mixing each of components constituting an adhesive include, without being particularly limited to, a general method, for example, a method of using a mixer such as planetary mixer.

A defoaming treatment can be carried out optionally in the final step of production of the resin composition.

One of the preferred embodiments of the method of producing the adhesive of the present invention is
a method of producing a resin composition containing (B) a urethane-modified epoxy resin and (C) an epoxy resin other than the urethane-modified epoxy resin, having:
step 1: mixing (A) a modified cellulose fiber and (B) the urethane-modified epoxy resin, and
step 2: mixing a mixture obtained in step 1 and (C) the epoxy resin other than the urethane-modified epoxy resin.

According to the production method, a resin composition of the present invention obtained by mixing a mixture of (A) the modified cellulose fiber and (B) the urethane-modified epoxy resin, and (C) the epoxy resin other than the urethane-modified epoxy resin can be obtained. Here, in the case where plural resins of (C) component are used, a second resin of (C) component may be mixed after mixing a first resin of (C) component into a mixture of (A) component and (B) component.

In the production method, it is preferred that a dispersing treatment is carried out at the time of mixing in step (1) from the viewpoint of more improving dispersibility. The dispersing treatment includes a dispersing treatment using a grinder such as Masscolloider, or a dispersing treatment using a high-pressure homogenizer or the like in a medium, and the dispersing treatment using a high-pressure homogenizer is preferred, from the viewpoint of dispersion uniformity. The medium conforms to the explanation of medium mentioned above. Here, in the case where medium is used, it is preferred to distill off a solvent by an evaporator to optimize miscibility in step 2.

In the production method, the mass ratio of the modified cellulose fiber / Component (B) in step 1 is converted to a formulated amount, and the mass ratio is preferably 0.005 or more, more preferably 0.010 or more, and even more preferably 0.030 or more, from the viewpoint of increasing elongation at break, and on the other hand, the mass ratio is preferably 10 or less, more preferably 5 or less, even more preferably 3 or less, even more preferably 1.0 or less, even more preferably 0.5 or less, even more preferably 0.10 or less, and even more preferably 0.07 or less, from the viewpoint of viscosity.

One of other preferred embodiments of methods of producing the resin composition of the present invention is
a method of producing a resin composition containing (B) a urethane-modified epoxy resin and (C) an epoxy resin other than the urethane-modified epoxy resin, having the following step 3 or step 4:
step 3: mixing (A) a modified cellulose fiber, (B) the urethane-modified epoxy resin and (C) the epoxy resin other than the urethane-modified epoxy resin, or
step 4: mixing (B) the urethane-modified epoxy resin and (C) the epoxy resin other than the urethane-modified epoxy resin (step 4-1), and mixing the resulting composition and (A) the modified cellulose fiber (step 4-2).

In accordance with the production method, a resin composition of the present invention obtained by mixing a mixture of (B) the urethane-modified epoxy resin and (C) the epoxy resin other than the urethane-modified epoxy resin, and (A) the modified cellulose fiber can be obtained.

In the production method, it is preferred to carry out a dispersing treatment at the time of mixing in step 3 or step 4-2 from the viewpoint of more improving dispersibility. The dispersing treatment includes a dispersing treatment using a grinder such as Masscolloider, or a dispersing treatment using a high-pressure homogenizer or the like in a medium, and the dispersing treatment using a high-pressure homogenizer is preferred, from the viewpoint of dispersion uniformity. The medium conforms to the explanation of medium mentioned above. Here, in the case where medium is used, it is preferred to distill off a solvent by an evaporator to optimize miscibility in the next step.

In the production method, the mass ratio of the modified cellulose fiber / (total of Component (B) and Component (C)) in step 3 or step 4-2 is converted to a formulated amount, and the mass ratio is preferably 0.005 or more, more preferably 0.010 or more, and even more preferably 0.030 or more, from the viewpoint of increasing elongation at break, and on the other hand, the mass ratio is preferably 10 or less, more preferably 5 or less, even more preferably 3 or less, even more preferably 1.0 or less, even more preferably 0.5 or less, even more preferably 0.10 or less, and even more preferably 0.07 or less, from the viewpoint of viscosity.

One of other preferred embodiments of the production method of the resin composition of the present invention is
a method of producing a resin composition containing (B) a urethane-modified epoxy resin and (C) an epoxy resin other than the urethane-modified epoxy resin, having:
step 5: mixing (A) a modified cellulose fiber and (C) the epoxy resin other than the urethane-modified epoxy resin, and
step 6: mixing a composition obtained in step 5 and (B) the urethane-modified epoxy resin.

In accordance with the production method, a resin composition of the present invention obtained by mixing a mixture of (A) the modified cellulose fiber and (C) the epoxy resin other than the urethane-modified epoxy resin, and (B) the urethane-modified epoxy resin can be obtained.

In the production method, it is preferred to carry out a dispersing treatment at the time of mixing in step 5, from the viewpoint of more improving dispersibility. The dispersing treatment includes a dispersing treatment using a grinder such as Masscolloider, or a dispersing treatment using a high-pressure homogenizer or the like in a medium, and the dispersing treatment using a high-pressure homogenizer is preferred, from the viewpoint of dispersion uniformity. The medium conforms to the explanation of medium mentioned above. Here, in the case where medium is used, it is preferred to distill off a solvent by an evaporator to optimize miscibility in step 6.

**In** the production method, the mass ratio of the modified cellulose fiber / Component (C) in step 5 is converted to a formulated amount, and the mass ratio is preferably 0.005 or more, more preferably 0.010 or more, and even more preferably 0.030 or more from the viewpoint of increasing elongation at break, and on the other hand, the mass ratio is preferably 10 or less, more preferably 5 or less, even more preferably 3 or less, even more preferably 1.0 or less, even more preferably 0.5 or less, even more preferably 0.10 or less, and even more preferably 0.07 or less, from the viewpoint of viscosity.

Among these preferred embodiments of the production method, the production method having step 1 and step 2 or the production method having step 3 or step 4 is more preferred, and a production method having step 1 and step 2 is even more preferred, from the viewpoint of improving handling property and elongation in a tensile test and a shear adhesion test.

Here, the preferred formulation ratio of (A) component, (B) component and (C) component in the above production method can be obtained from "amount of resin in the composition of the present invention" and "mass ratio of modified cellulose fiber / resin in the composition of the present invention" mentioned above.

The solvent which can be used at the time of production includes, for example, the solvent which can be used in the resin composition of the present invention mentioned above.

When the solvent is used, the amount thereof is, for example, preferably 50 parts by mass or more, and more preferably 100 parts by mass or more, and on the other hand, the amount is preferably 5000 parts by mass or less, and more preferably 2000 parts by mass or less, based on 100 parts by mass of the resin.

### < Adhesive and Adhesion Method >

The adhesive of the present invention is a product containing the above resin composition of the present invention or a product consisting of the above resin composition of the present invention.

The adhesion method of the present invention includes, for example a method including applying an adhesive of the present invention on a structure (or a member thereof), and pasting it to a counterpart structure (or a member thereof). The adhesive described above includes structural adhesive.

A preferred embodiment of the adhesive of the present invention is a structural adhesive.

The structural adhesive is an adhesive used in a structure requiring mechanical strength such as vehicles and construction buildings, and the adhesive is preferably used in adhering vehicle assembly products, which is used in place of or for reinforcement of conventional bonding techniques such as welding, nuts and bolts, and rivet. Therefore, a method of adhering vehicle assembly products having a step of using the adhesive of the present invention to adhere the vehicle assembly products is provided.

The adhesive of the present invention *per se* can be used as a structural adhesive, or the adhesive can be used as a material for an adhesive for blending other components to obtain an adhesive.

The vehicles include rockets, airplanes, drones, automobiles, boats and ships, and the like. Specifically, the adhesive is used to structurally adhere parts such as automobile body or automobile parts to produce automobile structures, and particularly, the adhesive is suitably used in adhesion in a technique combining spot welding and an adhesive (weld bonding technique).

The method of applying the adhesive mentioned above to a structure includes, but not particularly limited to, a method using, for example, a spray, a sealer gun, a dispenser, a nozzle, a paintbrush, a spatula, or the like. Among them, since the adhesive of the present invention has excellent jetting property, it is preferable to use a dispenser. When a dispenser is used, an embodiment of jetting an adhesive from the dispenser, and applying the adhesive to a structure is listed.

A structure is pasted to a counterpart structure, and then maintained at, for example, from -30° to 200°C for 1 minute to 3 days, whereby the adhesion of the two structures can be completed.

The adhesive of the present invention has excellent binding ability to various materials, for example, metals such as iron, aluminum and copper; alloys such as iron steels and aluminum alloys; plastics such as polypropylene, polyamides, and polyacetals; fiber-reinforced plastics such as carbon fiber-reinforced plastics and glass fiber-reinforced plastics; rubbers; carbon fibers; glass; ceramics; and the like, and has high strength, so that the adhesive can contribute to weight reduction and the reduction of the welding costs of the structure, for example, vehicles. The adhesive of the present invention is suitably used in adhering a metal member, and more preferably used when an adhesion surface of the metal member contains aluminum.

In the adhesion method of the present invention, a surface of a structure or a member thereof which is applied with an adhesive, i.e., an adhesion surface, is preferably a material containing one or more members selected from the group consisting of metals, plastics, ceramics and glass, more preferably a material containing a metal and/or plastics, and even more preferably a material containing a metal.

Specifically, the adhesion method of the present invention is preferably a method including applying an adhesive of the present invention on a metal member, and pasting the metal member to a counterpart metal member.

Here, the metal member refers to a material formed with a metal, which is different from a powder or the like.

It is preferable that the material of the adhesion surface used in the adhesion method of the present invention contains a metal having a coefficient of linear expansion of 20 × 10⁻⁶/°C or more. The metal as described above includes aluminum, zinc, and the like. Even when the coefficient of linear expansion is high, heat shrinkage of the adhesive of the present invention is inhibited, so that it is assumed that the adhesive strength becomes high.

More specifically, the adhesion surface of metal members includes, for example, steel sheets, SPC steel sheets, plated steel sheets (for example, electrogalvanized steel sheets, hot-dip galvanized steel sheets, organic surface-treated steel sheets, alloying galvanized steel sheets, zinc-nickel alloy-plated steel sheets, tin-lead plated steel sheets, cationically electroplated steel sheets), aluminum sheets, aluminum alloy sheets (for example, aluminum-manganese alloy sheets, aluminum-magnesium alloy sheets), and magnesium sheets. The adhesion surface of plastics includes, for example, fiber-reinforced plastic fiber sheets such as carbon fiber-reinforced plastics, glass fiber-reinforced plastics, and the like. The adhesion surface of ceramics includes, for example, barium titanate, boron nitride, silicon nitride, lead titanate zirconate, aluminum oxide, aluminum nitride, silicon carbide, zinc oxide, zirconia, ferrite, indium oxide, silicon, and the like. The adhesion surface of glass includes, for example, soda lime glass, lead glass, borosilicate glass, silica glass, and the like. Particularly, when the adhesion surface of a metal member contains aluminum, the adhesive composition of the present invention or the adhesion method of the present invention is suitably applied.

The adhesive of the present invention is also particularly excellent in the adhesiveness of the materials that have different physical properties to each other (for example, metal materials having different coefficients of linear expansion), for example, adhesion of a metal having a coefficient of linear expansion of 20 × 10⁻⁶/°C or more and a metal having a coefficient of linear expansion of less than 20 × 10⁻⁶/°C, or the like. Specifically, the adhesive is also excellent in adhesive strength of a combination of different metals (for example, steel and aluminum alloy, i.e. a metal containing iron and a metal containing aluminum, and the like). The metal containing iron can be used as a steel sheet, and the metal containing aluminum can be used as an alloy sheet. Therefore, the adhesion method of the present specification can be also suitably applied to a method of adhering dissimilar metals.

### < Method of Improving Elongation at Break of Structural Adhesive >

Elongation at break can be improved by mixing (A) the modified cellulose fiber mentioned above and (B) the urethane-modified epoxy resin mentioned above. Therefore, a method of improving elongation at break of the structural adhesive of the present inventions has a step of mixing (A) a modified cellulose fiber and (B) a urethane-modified epoxy resin.

### < Adhesive Kit >

An adhesive kit of the present invention contains a container containing the above adhesive of the present invention. The adhesive kit of the present invention is provided as a one-component adhesive or a two-component adhesive.

In the case of the one-component adhesive, the adhesive of the present invention is contained in one container, and a curing agent or a curing accelerator is also contained in the same container.

In the case of the two-component adhesive, an adhesive kit containing a first container containing the resin composition of the present invention and a second container containing a curing agent can be exemplified. The adhesive kit described above may further contain a curing accelerator. In the case of the two-component adhesive, since the kit described above can cure the adhesive by mixing the adhesive and the curing agent or the like at the time of use, the kit is highly convenient.

A container containing an adhesive, a composition, or each component constituting them is not particularly limited, and a tube, a caulking gun, a glue gun, a cartridge for a dispenser or the like which is conventionally known can be used.

With respect to the above-mentioned embodiments, the present invention further discloses a resin composition, an adhesive, a method of adhering vehicle assembly products, a method of producing the resin composition, a method of improving elongation at break of a structural adhesive and an adhesive kit mentioned hereinbelow.
<1> A resin composition containing (A) a modified cellulose fiber, (B) a urethane-modified epoxy resin, and (C) an epoxy resin other than the urethane-modified epoxy resin.
<2> The resin composition according to the above <1>, wherein the modified cellulose fiber has a cellulose I crystal structure, and an average fiber diameter thereof is preferably 1 nm or more and preferably 300 nm or less.
<3> The resin composition according to the above <1> or <2>, wherein an average fiber length of the modified cellulose fiber is preferably 10 nm or more, more preferably 30 nm or more, and even more preferably 50 nm or more, and preferably 1000 nm or less, more preferably 800 nm or less, even more preferably 500 nm or less, even more preferably 300 nm or less, and even more preferably less than 150 nm.
<4> The resin composition according to any one of the above <1> to <3>, wherein an average aspect ratio of the modified cellulose fiber is preferably 5 or more, more preferably 10 or more, and even more preferably 20 or more, and preferably 300 or less, more preferably 200 or less, even more preferably 150 or less, even more preferably 100 or less, and further even more preferably 70 or less.
<5> The resin composition according to any one of the above <1> to <4>, wherein the modified cellulose fiber is an anionically modified cellulose fiber bound with a modifying group, and the modifying group is a group containing one or more selected from the group consisting of (i) a hydrocarbon group having three or more carbon atoms, (ii) a silicone chain and (iii) an alkylene oxide chain.
<6> The resin composition according to any one of the above <1> to <5>, wherein the modifying group is bound with the anionically modified cellulose fiber at an anionic group via an ionic bond and/or a covalent bond.
<7> The resin composition according to any one of the above <1> to <6>, wherein the modifying group is bound with a carboxy group to which a part or all of hydroxy groups of the cellulose fiber or a group at a position C6 (-CH₂OH) of a glucose unit constituting the cellulose fiber is converted to a carboxy group.
<8> The resin composition according to any one of the above <1> to <7>, wherein the number of the carbon atoms of the hydrocarbon groups is preferably 3 or more, more preferably 8 or more, and even more preferably 10 or more, and preferably 30 or less, more preferably 22 or less, and even more preferably 18 or less.
<9> The resin composition according to any one of the above <1> to <8>, wherein a formula weight (molecular weight) of the alkylene oxide chain is preferably 500 or more, and more preferably 1,000 or more, and preferably 10,000 or less, and more preferably 7,000 or less.
<10> The resin composition according to any one of the above <1> to <9>, wherein the epoxy resin other than the urethane-modified epoxy resin is at least one selected from the group consisting of a bisphenol epoxy resin, a rubber-modified epoxy resin, an alicyclic epoxy resin, a glycidyl amine epoxy resin, a polysulfide-modified epoxy resin, a chelate-modified epoxy resin, a tris-phenol methane epoxy resin, a naphthalene epoxy resin, a dicyclopentadiene-modified epoxy resin, an aliphatic epoxy resin such as an epoxide of an aliphatic polyol or a derivative thereof, a polyether-modified epoxy resin, a polyfunctional aromatic epoxy resin, and a hydrogenated bisphenol epoxy resin.
<11> The resin composition according to any one of the above <1> to <10>, wherein the content of (B) component in the composition is preferably 1% by mass or more and less than 80% by mass, and the content of (C) component is preferably 1% by mass or more and less than 80% by mass.
<12> The resin composition according to any one of the above <1> to <11>, wherein the content of (B) component in the composition is more preferably 5% by mass or more and 65% by mass or less and the content of (C) component is more preferably 35% by mass or more and less than 85% by mass, and even more preferably the content of (B) component is 10% by mass or more and 60% by mass or less and the content of (C) component is 40% by mass or more and 80% by mass or less.
<13> The resin composition according to any one of the above <1> to <12>, wherein the composition is obtained by mixing a mixture of the modified cellulose fiber and the urethane-modified epoxy resin, and the epoxy resin other than the urethane-modified epoxy resin.
<14> The resin composition according to any one of the above <1> to <12>, wherein the composition is obtained by mixing a mixture of the urethane-modified epoxy resin and the epoxy resin other than the urethane-modified epoxy resin, and the modified cellulose fiber.
<15> The resin composition according to any one of the above <1> to <12>, which is obtained by mixing a mixture of the modified cellulose fiber and the epoxy resin other than the urethane-modified epoxy resin, and the urethane-modified epoxy resin.
<16> The resin composition according to any one of the above <1> to <15>, wherein a content ratio of (C) component to (B) component [(C)/(B)] in the composition is preferably 0.4 or more and 15 or less, more preferably 0.5 or more and 12 or less, and even more preferably 0.6 or more and 10 or less.
<17> The resin composition according to any one of the above <1> to <16>, wherein a mass ratio of the cellulose fiber / Component (B) in the composition is preferably 0.001 or more, more preferably 0.005 or more, and even more preferably 0.01 or more, and preferably 10 or less, more preferably 5 or less, even more preferably 3 or less, even more preferably 1.0 or less, even more preferably 0.5 or less, and even more preferably 0.10 or less.
<18> The resin composition according to any one of the above <1> to <17>, wherein a mass ratio of the cellulose fiber / the resin in the composition is converted to a formulated amount, and the mass ratio is preferably 0.01/100 or more, more preferably 0.05/100 or more, even more preferably 0.1/100 or more, even more preferably 0.3/100 or more, and even more preferably 0.5/100 or more, and preferably 30/100 or less, more preferably 20/100 or less, even more preferably 15/100 or less, even more preferably 10/100 or less, even more preferably 7/100 or less, and even more preferably 5/100 or less.
<19> The resin composition according to any one of the above <1> to <18>, wherein a mass ratio is converted to a formulated amount, and the mass ratio is preferably 5 parts by mass or more, more preferably 15 parts by mass or more, and even more preferably 30 parts by mass or more, and preferably 90 parts by mass or less, more preferably 80 parts by mass or less, and even more preferably 70 parts by mass or less, based on 100 parts by mass of the resin, in the case where the composition contains a filler.
<20> The resin composition according to any one of the above <1> to <19>, wherein a viscosity of the composition is preferably 1,000mPa·s / 25°C or more, more preferably 3,000 mPa·s / 25°C or more, and even more preferably 5,000 mPa·s / 25°C or more, and preferably 1,000,000 mPa·s / 25°C or less, more preferably 750,000 mPa·s / 25°C or less, and even more preferably 500,000 mPa·s / 25°C or less.
<21> An adhesive containing a composition as defined in any one of the above <1> to <20>.
<22> The adhesive according to the above <21>, wherein the adhesive is a structural adhesive.
<23> The adhesive according to the above <21> or <22>, further containing a filler other than the modified cellulose fiber.
<24> The adhesive according to any one of the above <21> to <23>, wherein the adhesive is used for adhering a vehicle assembly product.
<25> A method of adhering a vehicle assembly product, including adhering the vehicle assembly product using an adhesive as defined in any one of the above <21> to <24>.
<26> A method of producing a resin composition containing a urethane-modified epoxy resin and an epoxy resin other than the urethane-modified epoxy resin, having:
   Step 1: mixing a modified cellulose fiber and the urethane-modified epoxy resin, and
   Step 2: mixing a mixture obtained in step 1 and the epoxy resin other than the urethane-modified epoxy resin.
<27> The method according to the above <26>, wherein a mass ratio of the modified cellulose fiber / Component (B) in step 1 is converted to a formulated amount, and the mass ratio is preferably 0.005 or more, more preferably 0.010 or more, and even more preferably 0.030 or more, and preferably 10 or less, more preferably 5 or less, even more preferably 3 or less, even more preferably 1.0 or less, even more preferably 0.5 or less, even more preferably 0.10 or less, and even more preferably 0.07 or less.
<28> A method of producing a resin composition containing a urethane-modified epoxy resin and an epoxy resin other than the urethane-modified epoxy resin, having the following step 3 or step 4:
   Step 3: mixing a modified cellulose fiber, the urethane-modified epoxy resin and the epoxy resin other than the urethane-modified epoxy resin, or
   Step 4: mixing the urethane-modified epoxy resin and the epoxy resin other than the urethane-modified epoxy resin (step 4-1), and mixing the resulting composition and the modified cellulose fiber (step 4-2).
<29> The method according to the above <28>, wherein a mass ratio of the modified cellulose fiber / (total of Component (B) and Component (C)) in step 3 or step 4-2 is converted to a formulated amount, and the mass ratio is preferably 0.005 or more, more preferably 0.010 or more, and even more preferably 0.030 or more, and preferably 10 or less, more preferably 5 or less, even more preferably 3 or less, even more preferably 1.0 or less, even more preferably 0.5 or less, even more preferably 0.10 or less, and even more preferably 0.07 or less.
<30> A method of producing a resin composition containing a urethane-modified epoxy resin and an epoxy resin other than the urethane-modified epoxy resin, having:
   Step 5: mixing a modified cellulose fiber and the epoxy resin other than the urethane-modified epoxy resin, and
   Step 6: mixing a composition obtained in step 5 and the urethane-modified epoxy resin.
<31> The method according to the above <30>, wherein a mass ratio of the modified cellulose fiber / Component (C) in step 5 is converted to a formulated amount, and the mass ratio is preferably 0.005 or more, more preferably 0.010 or more, and even more preferably 0.030 or more, and preferably 10 or less, more preferably 5 or less, even more preferably 3 or less, even more preferably 1.0 or less, even more preferably 0.5 or less, even more preferably 0.10 or less, and even more preferably 0.07 or less.
<32> A method of improving elongation at break of a structural adhesive, including mixing a modified cellulose fiber and a urethane-modified epoxy resin.
<33> An adhesive kit containing a container containing an adhesive as defined in any one of the above <21> to <24>.
<34> An adhesive kit containing a first container containing a composition as defined in any one of the above <21> to <24> and a second container containing a curing agent.

### EXAMPLES

The present invention will be described specifically by means of the following Examples and the like. Here, the following Examples are mere exemplifications of the present invention, without intending to limit the present invention thereto. Here, "ambient pressure" means 101.3 kPa, and "ambient temperature" means 25°C.

### [Average Fiber Diameter and Average Fiber Length of Cellulose Fibers and Anionically Modified Cellulose Fibers]

Deionized water was added to measurement subject cellulose fibers or a dispersion containing the measurement subject cellulose fibers, to prepare a dispersion of which content was 0.01% by mass. The dispersion was measured with a wet-dispersion type image analysis particle counter manufactured by JASCO International Co., Ltd. under the trade name of IF-3200, under the conditions of a front lens: 2 folds, telecentric zoom lens: 1 fold, image resolution: 0.835 µm/pixel, syringe inner diameter: 6515 µm, spacer thickness: 500 µm, image recognition mode: ghost, threshold value: 8, amount of analytical sample: 1 mL, and sampling: 15%. Moreover, one hundred sets of cellulose fibers were measured, to calculate an average by defining the length of a short axis as the fiber diameter and the length of a long axis as the fiber length upon approximating the cellulose fiber to a rectangle.

### [Average Fiber Diameter and Average Fiber Length of Cellulose Fibers After Finely Pulverizing Treatment]

Deionized water or N,N-dimethylformamide (DMF) was added to measurement subject cellulose fibers or a dispersion containing the measurement subject cellulose fibers, to prepare a dispersion of which content was 0.0001% by mass. The dispersion was added dropwise to mica (mica), and dried to provide an observation sample. A fiber height of the cellulose fibers in the observation sample, i.e. a difference in heights of areas in which the fibers were present or absent, was measured with an atomic force microscope (AFM), Nanoscope II Tapping mode AFM, manufactured by Digital Instrument; a probe used being Point Probe (NCH) manufactured by NANOSENSORS. During that measurement, 100 sets of cellulose fibers were extracted in a microscopic image in which the cellulose fibers could be confirmed, and an average fiber diameter was calculated from the fiber heights thereof. An average fiber length was calculated from a distance in the direction of fibers.

### [Anionic Group Content of Anionically Modified Cellulose Fibers]

Measurement subject cellulose fibers with the mass of 0.5 g on a dry basis were placed in a beaker, deionized water or a mixed solvent of methanol/deionized water = 2/1, volume ratio, was added thereto to make up a total volume of 55 mL. Five milliliters of a 0.01 M aqueous sodium chloride solution was added thereto to provide a dispersion, and the dispersion was stirred until the measurement subject cellulose fibers were sufficiently dispersed. A 0.1 M hydrochloric acid was added to this dispersion to adjust its pH to 2.5 to 3, and a 0.05 M aqueous sodium hydroxide solution was added dropwise to the dispersion with an automated titration instrument manufactured by DKK-TOA CORPORATION, AUT-710, under the conditions of a waiting time of 60 seconds, and the values of electroconductivity and a pH were measured every minute. The measurements continued up to a pH of 11 or so to obtain an electroconductivity curve. A titrated amount of sodium hydroxide was obtained from this electroconductivity curve, and the anionic group content of the measurement subject cellulose fibers was calculated in accordance with the following formula: 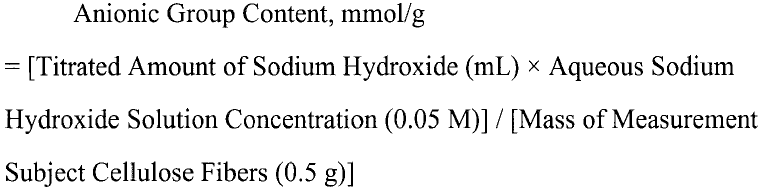 Anionic Group Content, mmol/g = [Titrated Amount of Sodium Hydroxide (mL) × Aqueous Sodium Hydroxide Solution Concentration (0.05 M)] / [Mass of Measurement Subject Cellulose Fibers (0.5 g)]

### [Binding Amount and Introduction Ratio of Modifying Groups of Modified Cellulose Fibers]

The binding amount of the modifying group of the modified cellulose fiber was obtained in accordance with the following IR determination method, and the binding amount and an introduction ratio thereof were calculated in accordance with the following formulas. The IR determination was specifically taken by obtaining an infrared absorption spectrum of dried measurement subject cellulose fibers by a measurement according to ATR method with an infrared absorption spectrophotometer (IR) Nicolet 6700 manufactured by Thermo Fisher Scientific K.K., and a binding amount and an introduction ratio of the modifying group were calculated in accordance with the following formula A. The following is a case where the anionic group is a carboxy group, i.e., a case of oxidized cellulose fibers. "Peak Intensity at 1720 cm⁻¹" mentioned below refers to a peak intensity ascribed to a carbonyl group. Here, in a case of an anionic group other than the carboxy group, the binding amount and the introduction ratio of the modifying group may be calculated by appropriately changing the value of wavenumber. <Formula A> $Binding Amount of Modifying Group , mmol / g = a \times \left(b-c\right) \div b$
**a:** a carboxy group content of oxidized cellulose fibers, mmol/g,
**b:** a peak intensity at 1720 cm⁻¹ of oxidized cellulose fibers; and
**c:** a peak intensity at 1720 cm⁻¹ of modified cellulose fibers.
<Formula B> $Introduction Ratio of Modifying Group , mol % = 100 \times f / g$
**f:** a binding amount of modifying group, mmol/g; and
**g:** a carboxy group content of oxidized cellulose fibers, mmol/g.

### [Content of Each Component]

A content of each component other than water was calculated from a formulated amount of each component.

With respect to the content of the glucose moiety, the content was calculated by considering a mass of the anionically modified cellulose fiber contained in the formulated modified cellulose fiber as a mass of a glucose moiety, assuming that all the anionically modified cellulose fiber formulated during the preparation of the modified cellulose fiber and the compound for modification were ionically bonded.

In addition, the contents of water in the dispersion and suspension were measured by Karl Fischer titration using CA-200 manufactured by Mitsubishi Chemical Analytech, Co., Ltd.

In addition, with respect to a solid concentration in each cellulose fiber, water concentrations in samples were measured using an infrared moisture meter, MOC-120H, manufactured by Shimadzu Corporation, and the solid concentration was calculated from difference to 100% by mass. As the water concentration, a measurement was carried out for or per 1 g of sample every 30 seconds in a thermostat at 150°C, and numerals represented at the time point in which mass decrease for 30 seconds was 0.1% or less were used.

### [Confirmation of Crystal Structure in Modified Cellulose Fibers]

The crystal structure of the modified cellulose fibers was confirmed by measuring with an X-ray diffractometer MinicFlex II manufactured by Rigaku Corporation under the following conditions.

The measurement conditions were: X-ray source: Cu/Kα-radiation, tube voltage: 30 kv, tube current: 15 mA, measurement range: diffraction angle 2θ = 5° to 45°, and scanning speed of X-ray: 10°/min. A sample for the measurement was prepared by compressing the measurement subject cellulose fibers to pellets having an area of 320 mm² and a thickness of 1 mm. In addition, the crystallinity of the cellulose I crystal structure was calculated using X-ray diffraction intensity obtained based on the following formula C:
<Formula C> $Cellulose I Cristallinity , % = \left[\left({I}_{22.6}-{I}_{18.5}\right)/{I}_{22.6}\right] \times 100$ wherein I_{22.6} is a diffraction intensity of a lattice face (002 face) (angle of diffraction 2θ = 22.6°), and I_{18.5} is a diffraction intensity of an amorphous portion (angle of diffraction 2θ = 18.5°), in X-ray diffraction.

On the other hand, in a case where a crystallinity obtained by the above formula C is 35% or less, it is preferable to calculate the value based on the formula D given below, in accordance with the description of P199-200 of "Mokushitsu Kagaku Jikken Manyuaru (Wood Science Experimental Manual)," edited by The Japan Wood Research Society, issued in April, 2000 from the viewpoint of improving the calculation accuracy.

Therefore, in a case where a crystallinity obtained by the above formula C is 35% or less, a calculated value based on the following formula D can be used as a crystallinity:
<Formula D> $Cellulose I Crystallinity , % = \left[{A}_{c}/\left({A}_{c}+{A}_{a}\right)\right] \times 100$ wherein A_{c} is a total sum of peak areas of a lattice face (002 face) (angle of diffraction 2θ = 22.6°), a lattice face (011 face) (angle of diffraction 2θ = 15.1°), and a lattice face (0-11 face) (angle of diffraction 2θ = 16.2°), Aₐ is a peak area of an amorphous portion (angle of diffraction 20 = 18.5°), each peak area being calculated by fitting the X-ray diffraction chart obtained in a Gaussian function, in X-ray diffraction.

### [Cellulose Fibers in Modified Cellulose Fibers (Conversion Amount)]

The amount of the cellulose in the modified cellulose fibers (conversion amount) refers to an amount of cellulose obtained by excluding the modifying group in the modified cellulose fibers. Since the modified cellulose fibers in the present invention may have a larger formula weight of the modifying group than a certain level (for example, larger than a molecular weight of glucose), when it is reasonable to explain by excluding the difference of the formula weight of the modifying group in the present specification, the amount was expressed by the amount of the cellulose constituting the modified cellulose fibers (conversion amount), but not the amount of the modified cellulose fibers.

The cellulose fibers (conversion amount) in the modified cellulose fibers were measured by the following methods:
(1) In a case where "a compound for modification" to be added is one kind
   The amount of the cellulose fibers (conversion amount) was calculated by the following formula E: <Formula E> 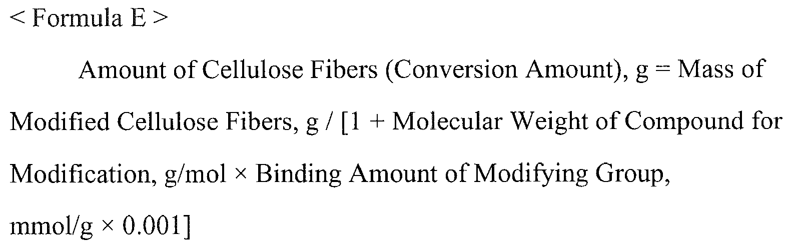 Amount of Cellulose Fibers (Conversion Amount), g = Mass of Modified Cellulose Fibers, g / [1 + Molecular Weight of Compound for Modification, g/mol × Binding Amount of Modifying Group, mmol/g × 0.001]
(2) In a case where "compounds for modification" to be added are two or more kinds
   The amount of the cellulose fibers (conversion amount) was calculated by taking a molar ratio of each of the compounds (i.e., a molar ratio when a total molar amount of the compounds to be added is defined as 1) into consideration.

### Production Example 1 [Production of Anionically Modified

### Cellulose Fibers]

The anionically modified cellulose fiber 1 having values of physical properties described in Table 1 was used as a raw material of Component (A).

### [Table 1]

**Table 1**

| | Anionically modified cellulose fiber 1 |
|---|---|
| Average fiber diameter | 39 µm |
| Average fiber length | 1003 µm |
| Carboxy group content | 1.4 mmol/g |
| Solid content concentration | 33.1% by mass |

The anionically modified cellulose fiber 1 described above can be prepared, for example, by carrying out the following TEMPO oxidation treatment.

### [TEMPO Oxidation Treatment]

In a 2L PP beaker equipped with a mechanical stirrer and a stirrer bar, 20 g of needle-leaf bleached kraft pulp as a natural cellulose fiber for a raw material and 1980 g of deionized water are weighed, and the content is stirred at 100 rpm for 30 minutes at 25°C. Next, 0.26 g of 2,2,6,6-tetramethyl-1-piperidine-N-oxyl (TEMPO), 2.6 g of sodium bromide and 70.0 g of 10.5% by mass of aqueous sodium hypochlorite solution are added to 20 g of the pulp fibers in this order. Then, pH stat titration is carried out using an automated titration instrument, and 0.5 M aqueous sodium hydroxide solution is added dropwise thereto, to maintain pH at 10.5. A reaction is carried out at 100 rpm for 120 minutes at 25°C. Thereafter, 0.01 M of hydrochloride is added thereto while stirring, and the pH of suspension is adjusted to 2. Next, solid contents are filtered off by a suction filtration. The solid contents are dispersed into deionized water, and an operation of filtrating off the solid contents by a suction filtration is repeated until conductivity of the filtrate is 200 µS/cm or less. Dehydration treatment is carried out for the resulting solid content, and an anionically modified cellulose fiber can be obtained.

### Production Example 2 [Production of Modified Cellulose Fibers 2A and 2B]

To a cake of 227 g of anionically modified cellulose fiber 1 in Production Example 1 (solid content amount of 75 g), 1-methoxy-2-propanol (PGME) was added, to provide anionically modified cellulose fibers having two kinds of concentration of dispersion A of which a solid concentration is 2.0% by mass and dispersion B of which a solid concentration is 5.0% by mass in a swollen state with PGME.

An amine (EO/PO amine mentioned below) was added to each of the resulting dispersions to have a formulated amount described in Table 2A, and the mixture was stirred for 1 hour at 25°C, to provide dispersions of modified cellulose fibers 2A and 2B having a modifying group via an ionic bond.

EO/PO amine: Methoxy poly(oxyethylene/oxypropylene)-2-propylamine, Jeffamine M2070, manufactured by Huntsman, U.S.A., Mw = 2,000, EO/PO = 31/10

### [Table 2A]

**Table 2A**

| | | | Modified cellulose fibers 2A and 2B |
|---|---|---|---|
| Formulated amount (part by mass) | Anionically modified cellulose fiber1 | | 100 |
| | Compound for modification | EO/PO amine | 67 |
| Introduction rate of modifying group (mol%) [to carboxy group] | | | 24 |

### Production Example 3 [Production of Shortened Modified Cellulose Fibers 3A and 3B]

Deionized water was added to a cake of 227 g of anionically modified cellulose fiber 1 obtained in Production Example 1 (solid content amount of 75 g) until the solid content concentration became 5% by mass from the value shown in Table 1. The resulting suspension was stirred for 12 hours at 95°C, to provide an aqueous suspension of a shortened anionically modified cellulose fiber. The resulting suspension was centrifuged at a condition of 25°C, 10,000 G for 1 minute using ahigh-speed refrigerated centrifuge, CR21G III, manufactured by Koki Holdings Co., Ltd., to provide a dispersion of a shortened anionically modified cellulose fiber in an amount of 85 g (solid content concentration of 23.5% by mass) as a precipitate.

Thereafter, the precipitate was subjected to a solvent exchange with PGME, to provide shortened anionically modified cellulose fibers having two kinds of concentration of dispersion A of which solid content concentration of 2.0% and dispersion B of which solid content concentration of 5.0% in a swollen state with PGME.

An amine (EO/PO amine described above) was added to each of the resulting dispersions to have a formulated amount described in Table 2B, and the mixture was stirred for 1 hour at 25°C, to provide dispersions of shortened modified cellulose fibers 3A and 3B having a modifying group via an ionic bond.

### [Table 2B]

**Table 2B**

| | | | Modified cellulose fibers 3A and 3B |
|---|---|---|---|
| Formulated amount (part by mass) | Shortened anionically modified cellulose fiber1 | | 100 |
| | Compound for modification | EO/PO amine | 67 |
| Introduction rate of modifying group (mol%) [to carboxy group] | | | 24 |

### Production Example 4 (Production of Shortened Modified Cellulose Fiber 4)

Dispersion of the shortened anionically modified cellulose fiber in a swollen state with PGME (solid content concentration of 5.0%) was obtained in the same manner as that of Example 3.

The resulting dispersion in an amount of 21.4 g was mixed with an octylamine, Octylamine, FARMIN 08D, manufactured by Kao Corporation in an amount of 0.07 g, and the mixture was stirred for 1 hour at 25°C, to provide dispersions of shortened modified cellulose fiber 4.

Production Example 5 [Production of Nonmodified Cellulose Fiber] Dispersions of shortened anionically modified cellulose fibers which is an intermediate product of Production Example 3 in a swollen state with PGME (solid content concentration of 5.0%) were stirred for 1 hour at 25°C, to provide dispersions of nonmodified anionically modified cellulose fiber 5.

### Production Examples 6 to 8 [Production of Finely Pulverized Modified Cellulose Fibers]

After stirring at 25°C for 1 hour, the dispersions of modified cellulose fiber 2A obtained in Production Example 2 was subjected to a dispersing treatment five times with a high-pressure homogenizer NanoVater L-ES, manufactured by YOSHIDA KIKAI CO., LTD. at 150 MPa, to provide dispersions of finely pulverized modified cellulose fiber 6.

The same dispersing treatment as that mentioned above was carried out for each of modified cellulose fibers obtained in Production Examples 3 to 4, to provide dispersions of finely pulverized modified cellulose fibers 7 to 8.

Average fiber diameter and average fiber length of each of finely pulverized modified cellulose fibers 6 to 8 and nonmodified cellulose fiber of Production Example 5 are shown in Table 2C.

### [Table 2C]

**Table 2C**

| | Finely pulverized modified cellulose fiber | | | Production Ex. 5 |
|---|---|---|---|---|
| | 6 | 7 | 8 | |
| Average fiber diameter | 2.7 nm | 3.3 nm | 23 nm | 12 µm |
| Average fiber length | 594 nm | 132 nm | 311 nm | 217 µm |
| (Production Ex. before Fine pulverization) | (Production Ex. 2) | (Production Ex. 3) | (Production Ex. 4) | |

### Example 1 (Production of Resin Composition)

### (a) step 1

PGME dispersion of the shortened modified cellulose fiber 3A obtained in Production Example 3 (cellulose solid content concentration of 2.0%) in an amount of 100 g and a urethane-modified epoxy resin in an amount of 100 g were stirred for 1 hour at 25°C. Then the mixture was subjected to the dispersing treatment five times with a high-pressure homogenizer NanoVater L-ES, manufactured by YOSHIDA KIKAI CO., LTD. at 150 MPa. Thereafter, a solvent was distilled off with an evaporator, to provide a mixture containing a modified cellulose fiber and a urethane-modified epoxy resin.

### Condition of Evaporator

Warter-bath temperature: 75°C
Degree of reducing pressure (absolute pressure): 0 to 1 kPa Judgment of termination of distillation off: Termination of distillation off was judged by the presence of mass decrease corresponding to a formulated amount of water and an organic solvent.

### (b) step 2

Next, 150 g of bisphenol A epoxy resin was added to 103 g of the mixture, the mixture was stirred for 10 minutes using a planetary mixer HIVISMIX 2P-1, manufactured by PRIMIX Corporation at 25°C, to provide a mixture containing a modified cellulose fiber, a urethane-modified epoxy resin and an epoxy resin.

### (c) step A

Next, 15 g of dicyandiamide, polyaddition curing agent DICY7, manufactured by Mitsubishi Chemical Corporation and 5 g of 3-(3,4-dichlorophenyl)-1,1-dimethylurea, curing accelerator DCMU99, manufactured by Hodogaya Chemical Co., Ltd., are added to 253 g of the mixture, and the mixture was stirred for 1 hour using the same planetary mixer at 25°C, to provide a mixture containing a modified cellulose fiber, a urethane-modified epoxy resin, an epoxy resin and a curing agent.

### (d) step B

Next, 25 g of polypropylene glycidyl ether (reactive diluent) was added to 273 g of the mixture, and the mixture was stirred for 10 minutes using the same planetary mixer at 25°C, and thereafter, the mixture was defoamed for 1 hour under a reduced pressure (1,840 Pa), to produce a resin composition.

### Example 2 (Production of Resin Composition)

### (a) step 1

PGME dispersant of the shortened modified cellulose fiber 3B obtained in Prodction Example 3 (cellulose solid content concentration of 5.0%) was used to carry out step 1 in the same manner as Example 1, to provide a mixture containing a modified cellulose fiber and a urethane-modified epoxy resin.

### (b) step 2

Next, 150 g of bisphenol A epoxy resin was added to 108 g of the mixture, and the mixture was stirred for 10 minutes using a planetary mixer, HIVISMIX 2P-1 manufactured by PRIMIX Corporation at 25°C, to provide a mixture containing a modified cellulose fiber, a urethane-modified epoxy resin and an epoxy resin.

### (c) step A

Next, 15 g of dicyandiamide, polyaddition curing agent DICY7, manufactured by Mitsubishi Chemical Corporation and 5 g of 3-(3,4-dichlorophenyl)-1,1-dimethylurea, curing accelerator DCMU99, manufactured by Hodogaya Chemical Co., Ltd. were added to 258 g of the mixture, and the mixture was stirred for 1 hour using the same planetary mixer at 25°C, to provide a mixture containing a modified cellulose fiber, a urethane-modified epoxy resin, an epoxy resin and a curing agent.

### (d) step B

Next, 25 g of polypropylene glycidyl ether (reactive diluent) was added to 278 g of the mixture, and the mixture was stirred for 10 minutes using the same planetary mixer at 25°C, and thereafter the mixture was defoamed for 1 hour under a reduced pressure (1,840 Pa), to produce a resin composition.

### Example 3 (Production of Resin Composition)

### (a) step 5

A PGME dispersant of the shortened modified cellulose fiber 3A obtained in Example 3 (cellulose solid content concentration of 2.0%) in an amount of 100 g and a bisphenol A epoxy resin in an amount of 100 g were stirred for 1 hour at 25°C. Next, the mixture was subjected to a dispersing treatment five times using a high-pressure homogenizer NanoVater L-ES, manufactured by YOSHIDA KIKAI CO., LTD. at 150 MPa. Thereafter, a solvent was distilled off by an evaporator, to provide a mixture containing a modified cellulose fiber and a bisphenol A epoxy resin.

### (b) step 6

Next, 67 g of urethane-modified epoxy resin was added to 103 g of the mixture, and the mixture was stirred for 10 minutes using a planetary mixer, HIVISMIX 2P-1 manufactured by PRIMIX Corporation at 25°C, to provide a mixture containing a modified cellulose fiber, an epoxy resin and a urethane-modified epoxy resin.

### (c) step A

Next, 10 g of dicyandiamide, polyaddition curing agent DICY7, manufactured by Mitsubishi Chemical Corporation and 3 g of 3-(3,4-dichlorophenyl)-1,1-dimethylurea, curing accelerator DCMU99, manufactured by Hodogaya Chemical Co., Ltd. were added to 170 g of the mixture, the mixture was stirred for 1 hour using the same planetary mixer at 25°C, to provide a mixture containing a modified cellulose fiber, an epoxy resin, a urethane-modified epoxy resin and a curing agent.

### (d) step B

Next, 17 g of polypropylene glycidyl ether (reactive diluent) was added to 183 g of the mixture, and the mixture was stirred for 10 minutes using the same planetary mixer at 25°C, and thereafter, the mixture was defoamed for 1 hour under a reduced pressure (1,840 Pa), to produce a resin composition.

### Example 4 Production of Resin Composition)

### (a) step 3

A PGME dispersant of the shortened modified cellulose fiber 3B obtained in Production Example 3 (cellulose solid content concentration of 5.0%) in an amount of 100 g, a bisphenol A epoxy resin in an amount of 60 g and a urethane-modified epoxy resin in an amount of 40 g were stirred for 1 hour at 25°C. Next, the mixture was subjected to a dispersing treatment five times using a high-pressure homogenizer NanoVater L-ES, manufactured by YOSHIDA KIKAI CO., LTD. at 150 MPa. Thereafter, a solvent was distilled off by an evaporator, to provide a mixture containing a modified cellulose fiber, a bisphenol A epoxy resin and a urethane-modified epoxy resin.

### (b) step A

Next, 6 g of a dicyandiamide, polyaddition curing agent DICY7, manufactured by Mitsubishi Chemical Corporation and 2 g of 3-(3,4-dichlorophenyl)- 1,1-dimethylurea, curing accelerator DCMU99, manufactured by Hodogaya Chemical Co., Ltd. were added to 108 g of the mixture, and the mixture was stirred for 1 hour using the same planetary mixer at 25°C, to provide a mixture containing a modified cellulose fiber, an epoxy resin, a urethane-modified epoxy resin and a curing agent.

### (c) step B

Next, 10 g of a polypropylene glycidyl ether (reactive diluent) was added to 116 g of the mixture, and the mixture was stirred for 10 minutes using the same planetary mixer at 25°C, and thereafter, the mixture was defoamed for 1 hour under a reduced pressure (1,840 Pa), to produce a resin composition.

### Comparative Example 1

A resin composition without using a modified cellulose fiber in the resin composition of Example 1 was prepared as Comparative Example 1. In other words, 100 g of urethane-modified epoxy resin and 150 g of bisphenol A epoxy resin were added thereto, and the mixture was stirred for 10 minutes at 25°C using a planetary mixer HIVISMIX 2P-1, manufactured by PRIMIX Corporation, to provide a mixture containing a urethane-modified epoxy resin and an epoxy resin.

Next, 15 g of dicyandiamide (polyaddition curing agent) and 5 g of 3-(3,4-dichlorophenyl)-1,1-dimethylurea, curing accelerator DCMU99, manufactured by Hodogaya Chemical Co., Ltd. were added to 250 g of the mixture, and the mixture was stirred for 1 hour using the same planetary mixer at 25°C, and then 25 g of polypropylene glycidyl ether (reactive diluent) was added to 270 g of the mixture, and the mixture was stirred for 10 minutes using the same planetary mixer at 25°C, and thereafter, the mixture was defoamed for 1 hour under a reduced pressure (1,840 Pa), to produce a resin composition.

### Example 5 (Production of Resin Composition)

### (a) step 1

A mixture containing a modified cellulose fiber and a urethane-modified epoxy resin was obtained in the same manner as that of step 1 of Example 1.

### (b) step 2

Next, a mixture containing a modified cellulose fiber, a urethane-modified epoxy resin and an epoxy resin was obtained in the same manner as that of step 2 of Example 1.

### (c) step α

Next, 150 g of calcium carbonate (filler) was added to 253 g of the mixture, and the mixture was stirred for 10 minutes using the same planetary mixer at 25°C. Subsequently, 17.5 g of hydrophobized silica (filler) was added thereto, and the mixture was further stirred for 10 minutes at 25°C. Subsequently, 10 g of calcium oxide (filler) was added thereto, and the mixture was further stirred for 10 minutes at 25°C, to provide a mixture containing a modified cellulose fiber, a urethane-modified epoxy resin, an epoxy resin and various fillers.

### (d) step A

Next, 15 g of dicyandiamide, polyaddition curing agent DICY7, manufactured by Mitsubishi Chemical Corporation and 5 g of 3-(3,4-dichlorophenyl)-1,1-dimethylurea, curing accelerator DCMU99, manufactured by Hodogaya Chemical Co., Ltd. were added to 430.5 g of the mixture, and the mixture was stirred for 1 hour using the same planetary mixer at 25°C, to provide a mixture containing a modified cellulose fiber, a urethane-modified epoxy resin, an epoxy resin, various fillers and curing agent.

### (e) step B

Next, 25 g of polypropylene glycidyl ether (reactive diluent) was added to 450.5 g of the mixture, and the mixture was stirred for 10 minutes using the same planetary mixer at 25°C, and thereafter, the mixture was defoamed for 1 hour under a reduced pressure (1,840 Pa), to produce a resin composition.

### Example 6 (Production of Resin Composition)

### (a) step 1

A mixture containing a modified cellulose fiber and a urethane-modified epoxy resin was obtained in the same manner as that of step 1 of Example 2.

### (b) step 2

A mixture containing a modified cellulose fiber, a urethane-modified epoxy resin and an epoxy resin was obtained in the same manner as that of step 2 of Example 2.

### (c) step α

Next, various fillers formulated in step α of Example 5 were formulated into a mixture containing a modified cellulose fiber, a urethane-modified epoxy resin and an epoxy resin in the same manner, to provide a mixture containing a modified cellulose fiber, a urethane-modified epoxy resin, an epoxy resin and various fillers.

### (d) step A

A mixture containing a modified cellulose fiber, a urethane-modified epoxy resin, an epoxy resin, various fillers and a curing agent was obtained in the same manner as that of step A of Example 2.

### (e) step B

A resin composition was produced in the same manner as that of step B of Example 2.

### Example 7 (Production of Resin Composition)

### (a) step 5

A mixture containing a modified cellulose fiber and a bisphenol A epoxy resin was obtained in the same manner as that of step 5 of Example 3.

### (b) step 6

A mixture containing a modified cellulose fiber, an epoxy resin and a urethane-modified epoxy resin was obtained in the same manner as that of step 6 of Example 3.

### (c) step α

Next, various fillers formulated in step α of Example 5 were formulated into a mixture containing a modified cellulose fiber, a urethane-modified epoxy resin and an epoxy resin in the same manner, to provide a mixture containing a modified cellulose fiber, a urethane-modified epoxy resin, an epoxy resin and various fillers.

### (d) step A

A mixture containing a modified cellulose fiber, a urethane-modified epoxy resin, an epoxy resin, various fillers and a curing agent was obtained in the same manner as that of step A of Example 3.

### (e) step B

A resin composition was produced in the same manner as that of step B of Example 3.

### Example 8 (Production of Resin Composition)

### (a) step 3

A mixture containing a modified cellulose fiber and a bisphenol A epoxy resin was obtained in the same manner as that of step 3 of Example 4.

### (b) step 6

A mixture containing a modified cellulose fiber, a bisphenol A epoxy resin and a urethane-modified epoxy resin was obtained in the same manner as that of step 6 of Example 3.

### (c) step α

Next, various fillers formulated in step α of Example 5 were formulated into a mixture containing a modified cellulose fiber, a urethane-modified epoxy resin and an epoxy resin in the same manner, to provide a mixture containing a modified cellulose fiber, a urethane-modified epoxy resin, an epoxy resin and various fillers.

### (d) step A

A mixture containing a modified cellulose fiber, a urethane-modified epoxy resin, an epoxy resin, various fillers and a curing agent was obtained in the same manner as that of step A of Example 4.

### (e) step B

A resin composition was produced in the same manner as that of step B of Example 4.

### Comparative Example 2

A resin composition without using a modified cellulose fiber in the resin composition of Example 5 was prepared as Comparative Example 2.

A urethane-modified epoxy resin in an amount of 100 g and a bisphenol A epoxy resin in an amount of 150 g were mixed, and the mixture was stirred for 10 minutes using a planetary mixer HIVISMIX 2P-1, manufactured by PRIMIX Corporation at 25°C, to provide a mixture containing a modified cellulose fiber, a urethane-modified epoxy resin and an epoxy resin.

Next, 150 g of calcium carbonate (filler) was added to 250 g of the mixture, and the mixture was stirred for 10 minutes using the same planetary mixer at 25°C. Subsequently, 17.5 g of hydrophobized silica (filler) was added thereto, and the mixture was further stirred for 10 minutes at 25°C. Subsequently, 10 g of calcium oxide (filler) was added thereto, the mixture was further stirred for 10 minutes at 25°C, to provide a mixture containing a modified cellulose fiber, a urethane-modified epoxy resin, an epoxy resin and various fillers.

Next, 15 g of dicyandiamide, polyaddition curing agent DICY7, manufactured by Mitsubishi Chemical Corporation and 5 g of 3-(3,4-dichlorophenyl)-1,1-dimethylurea, curing accelerator DCMU99, manufactured by Hodogaya Chemical Co., Ltd. were added to 427.5 g of the mixture, and the mixture was stirred for 1 hour at 25°C using the same planetary mixer, to provide a mixture containing a urethane-modified epoxy resin, an epoxy resin, various fillers and a curing agent.

Next, 25 g of polypropylene glycidyl ether (reactive diluent) was added to 447.5 g of the mixture, and the mixture was stirred for 10 minutes using the same planetary mixer at 25°C, and thereafter, the mixture was defoamed for 1 hour under a reduced pressure (1,840 Pa), to produce a resin composition.

### Example 9 (Production of Resin Composition)

### (a) step 1

Step 1 was carried out using PGME dispersant of the shortened modified cellulose fiber 4 obtained in Production Example 4 (cellulose solid content concentration of 5.0%) in the same manner as that of Example 1, to provide a mixture containing a modified cellulose fiber and a urethane-modified epoxy resin.

### (b) step 2

Next, the same procedure as that of step 2 of Example 2 was carried out for 105 g of the mixture, to provide a mixture containing a modified cellulose fiber, a urethane-modified epoxy resin and an epoxy resin.

### (c) step A

Next, the same procedure as that of step A of Example 2 was carried out for 255 g of the mixture, to provide a mixture containing a modified cellulose fiber, a urethane-modified epoxy resin, an epoxy resin and a curing agent.

### (d) step B

Next, the same procedure as that of step B of Example 2 was carried out for 275 g of the mixture, to produce a resin composition.

### Example 10 (Production of Resin Composition)

### (a) step 1

A PGME dispersant of the shortened modified cellulose fiber 3B obtained in Production Example 3 (cellulose solid content concentration of 5.0%) in an amount of 100 g and a urethane-modified epoxy resin in an amount of 150 g were stirred for 1 hour at 25°C. Next, the mixture was subjected to a dispersing treatment five times using a high-pressure homogenizer NanoVater L-ES, manufactured by YOSHIDA KIKAI CO., LTD. at 150 MPa. Thereafter, a solvent was distilled off by an evaporator, to provide a mixture containing a modified cellulose fiber and a urethane-modified epoxy resin.

### (b) step 2

Next, 100 g of a bisphenol A epoxy resin was added to 158 g of the mixture, and the mixture was stirred for 10 minutes using a planetary mixer HIVISMIX 2P-1, manufactured by PRIMIX Corporation at 25°C, to provide a mixture containing a modified cellulose fiber, a urethane-modified epoxy resin and an epoxy resin.

### (c) step A

Next, the same procedure as that of step A of Example 2 was carried out for 258 g of the mixture, to provide a mixture containing a modified cellulose fiber, a urethane-modified epoxy resin, an epoxy resin and a curing agent.

### (d) step B

Next, the same procedure as that of step B of Example 2 was carried out for 278 g of the mixture, to produce a resin composition.

### Example 11 (Production of Resin Composition)

### (a) step 1

A PGME dispersant of the shortened modified cellulose fiber 3B obtained in Production Example 3 (cellulose solid content concentration of 5.0%) in an amount of 100 g and the urethane-modified epoxy resin in an amount of 25 g were stirred for 1 hour at 25°C. Next, the mixture was subjected to a dispersing treatment five times using a high-pressure homogenizer NanoVater L-ES, manufactured by YOSHIDA KIKAI CO., LTD. at 150 MPa. Thereafter, a solvent was distilled off by an evaporator, to provide a mixture containing a modified cellulose fiber and a urethane-modified epoxy resin.

### (b) step 2

Next, 225 g of bisphenol A epoxy resin was added to 33 g of the mixture, and the mixture was stirred for 10 minutes using a planetary mixer HIVISMIX 2P-1, manufactured by PRIMIX Corporation at 25°C, to provide a mixture containing a modified cellulose fiber, a urethane-modified epoxy resin and an epoxy resin.

### (c) step A

Next, the same procedure as that of step A of Example 2 was carried out for 258 g of the mixture, to provide a mixture containing a modified cellulose fiber, a urethane-modified epoxy resin, an epoxy resin and a curing agent.

### (d) step B

Next, the same procedure as that of step B of Example 2 was carried out for 278 g of the mixture, to produce a resin composition.

### Example 12 (Production of Resin Composition)

The same procedure as that of Example 2 was carried out except that a PGME dispersant of the modified cellulose fiber 2B obtained in Production Example 2 (cellulose solid content concentration of 5.0%) was used in place of a PGME dispersant of the shortened modified cellulose fiber 3B obtained in Production Example 3 (cellulose solid content concentration of 5.0%), to produce a resin composition.

### Comparative Example 3 (Production of Resin Composition)

The same procedure as that of Example 2 was carried out except that a PGME dispersion of the nonmodified cellulose fiber of Production Example 5 was used in place of a PGME dispersant of the shortened modified cellulose fiber 3B obtained in Production Example 3 (cellulose solid content concentration of 5.0%), to produce a resin composition.

### Comparative Example 4 (Production of Resin Composition)

### (a) step 1

A PGME dispersant of shortened modified cellulose fiber 3B obtained in Production Example 3 (cellulose solid content concentration of 5.0%) in an amount of 100 g and a bisphenol A epoxy resin in an amount of 100 g were stirred for 1 hour at 25°C. Next, the mixture was subjected to a dispersing treatment five times using a high-pressure homogenizer NanoVater L-ES, manufactured by YOSHIDA KIKAI CO., LTD. at 150 MPa. Thereafter, a solvent was distilled off by an evaporator, to provide a mixture containing a modified cellulose fiber and a bisphenol A epoxy resin.

### (b) step 2

Next, 150 g of bisphenol A epoxy resin was added to 108 g of the mixture, and the mixture was stirred for 10 minutes using a planetary mixer HIVISMIX 2P-1, manufactured by PRIMIX Corporation at 25°C, to provide a mixture containing a modified cellulose fiber and an epoxy resin.

### (c) step A

Next, the same procedure as that of step A of Example 2 was carried out for 258 g of the mixture, to provide a mixture containing a modified cellulose fiber, an epoxy resin and a curing agent.

### (d) step B

Next, the same procedure as that of step B of Example 2 was carried out for 278 g of the mixture, to produce a resin composition.

Compositions of the resin compositions in the above Examples 1 to 4 and 9 to 12, and Comparative Examples 1 and 3 to 4 were summarized in Table 3.

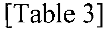

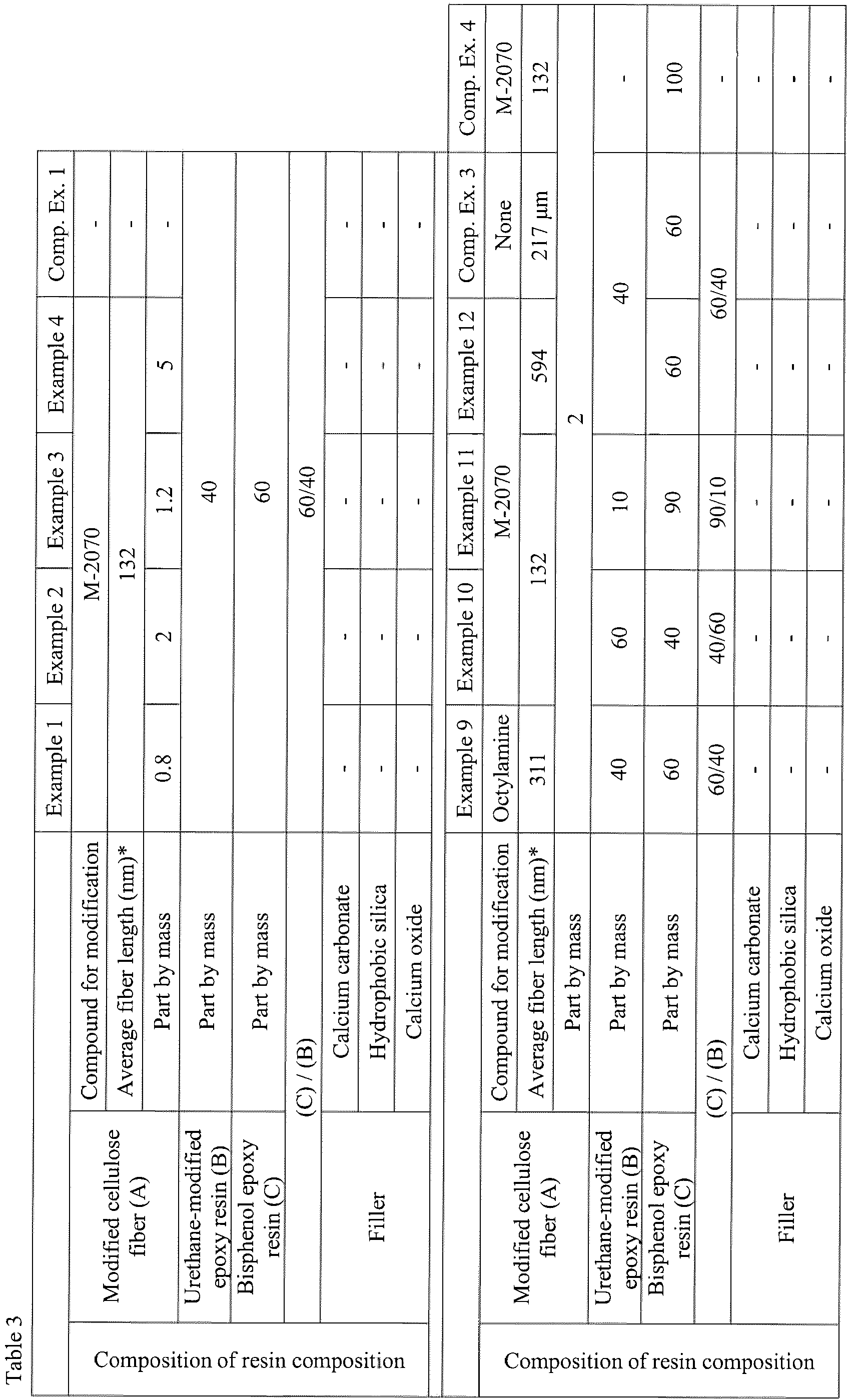

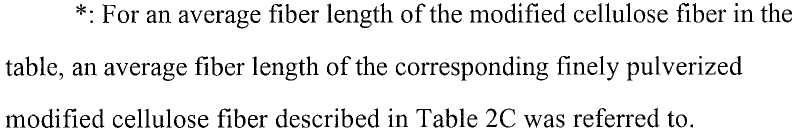

### Example 13 (Production of Resin Composition)

### (a) step 1

A mixture containing a modified cellulose fiber and a urethane-modified epoxy resin was obtained in the same manner as that of step 1 of Example 9.

### (b) step 2

A mixture containing a modified cellulose fiber, a urethane-modified epoxy resin and an epoxy resin was obtained in the same manner as that of step 2 of Example 9.

### (c) step α

Next, various fillers formulated in step α of Example 5 were formulated into the mixture containing a modified cellulose fiber, a urethane-modified epoxy resin and an epoxy resin in the same manner, to provide a mixture containing a modified cellulose fiber, a urethane-modified epoxy resin, an epoxy resin and various fillers.

### (d) step A

Next, a mixture containing a modified cellulose fiber, a urethane-modified epoxy resin, an epoxy resin, various fillers and a curing agent was obtained in the same manner as that of step A of Example 9.

### (e) step B

Next, A resin composition was produced in the same manner as that of step B of Example 9.

### Example 14 (Production of Resin Composition)

### (a) step 1

A mixture containing a modified cellulose fiber and a urethane-modified epoxy resin was obtained in the same manner as that of step 1 of Example 10.

### (b) step 2

A mixture containing a modified cellulose fiber, a urethane-modified epoxy resin and an epoxy resin was obtained in the same manner as that of step 2 of Example 10.

### (c) step α

Next, various fillers formulated in step α of Example 5 were formulated into a mixture containing a modified cellulose fiber, a urethane-modified epoxy resin and an epoxy resin in the same manner, to provide a mixture containing a modified cellulose fiber, a urethane-modified epoxy resin, an epoxy resin and various fillers.

### (d) step A

Next, a mixture containing a modified cellulose fiber, a urethane-modified epoxy resin, an epoxy resin, various fillers and a curing agent was obtained in the same manner as that of step A of Example 10.

### (e) step B

Next, a resin composition was produced in the same manner as that of step B of Example 10.

### Example 15 (Production of Resin Composition)

### (a) step 1

A mixture containing a modified cellulose fiber and a urethane-modified epoxy resin was obtained in the same manner as that of step 1 of Example 11.

### (b) step 2

A mixture containing a modified cellulose fiber, a urethane-modified epoxy resin and an epoxy resin was obtained in the same manner as that of step 2 of Example 11.

### (c) step α

Next, various fillers formulated in step α of Example 5 were formulated into a mixture containing a modified cellulose fiber, a urethane-modified epoxy resin and an epoxy resin in the same manner, to provide a mixture containing a modified cellulose fiber, a urethane-modified epoxy resin, an epoxy resin and various fillers.

### (d) step A

Next, a mixture containing a modified cellulose fiber, a urethane-modified epoxy resin, an epoxy resin, various fillers and a curing agent was obtained in the same manner as that of step A of Example 11.

### (e) step B

Next, a resin composition was produced in the same manner as that of step B of Example 11.

### Example 16 (Production of Resin Composition)

The same procedure as that of Example 6 was carried out except that a PGME dispersant of the modified cellulose fiber 2B obtained in Production Example 2 (cellulose solid content concentration of 5.0%) was used in place of a PGME dispersant of the shortened modified cellulose fiber 3B obtained in Production Example 3 (cellulose solid content concentration of 5.0%), to produce a resin composition.

### Comparative Example 5 (Production of Resin Composition)

The same procedure as that of Example 6 was carried out except that a PGME dispersion of the nonmodified cellulose fiber of Production Example 5 was used in place of a PGME dispersant of the shortened modified cellulose fiber 3B obtained in Production Example 3 (cellulose solid content concentration of 5.0%), to produce a resin composition.

### Comparative Example 6 (Production of Resin Composition)

### (a) step 1

A PGME dispersant of the shortened modified cellulose fiber 3B obtained in Production Example 3 (cellulose solid content concentration of 5.0%) in an amount of 100 g and a bisphenol A epoxy resin in an amount of 100 g were stirred for 1 hour at 25°C. Next, the mixture was subjected to a dispersing treatment five times using a high-pressure homogenizer NanoVater L-ES, manufactured by YOSHIDA KIKAI CO., LTD. at 150 MPa. Thereafter, a solvent was distilled off by an evaporator, to provide a mixture containing a modified cellulose fiber and a bisphenol A epoxy resin.

### (b) step 2

Next, 150 g of bisphenol A epoxy resin was added to 108 g of the mixture, the mixture was stirred for 10 minutes using a planetary mixer HIVISMIX 2P-1, manufactured by PRIMIX Corporation at 25°C, to provide a mixture containing a modified cellulose fiber and an epoxy resin.

### (c) step α

Next, various fillers formulated in step α of Example 5 were formulated into a mixture containing a modified cellulose fiber and an epoxy resin in the same manner, to provide a mixture containing a modified cellulose fiber, an epoxy resin and various fillers.

### (d) step A

Next, the same procedure as that of step A of Example 6 was carried out for 435.5 g of the mixture, to provide a mixture containing a modified cellulose fiber, an epoxy resin and a curing agent.

### (e) step B

Next, the same procedure as that of step B of Example 6 was carried out for 455.5 g of the mixture, to produce a resin composition.

The compositions of the resin compositions in the above Examples 5 to 8 and 13 to 16, and Comparative Examples 2 and 5 to 6 were summarized in Table 4.

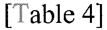

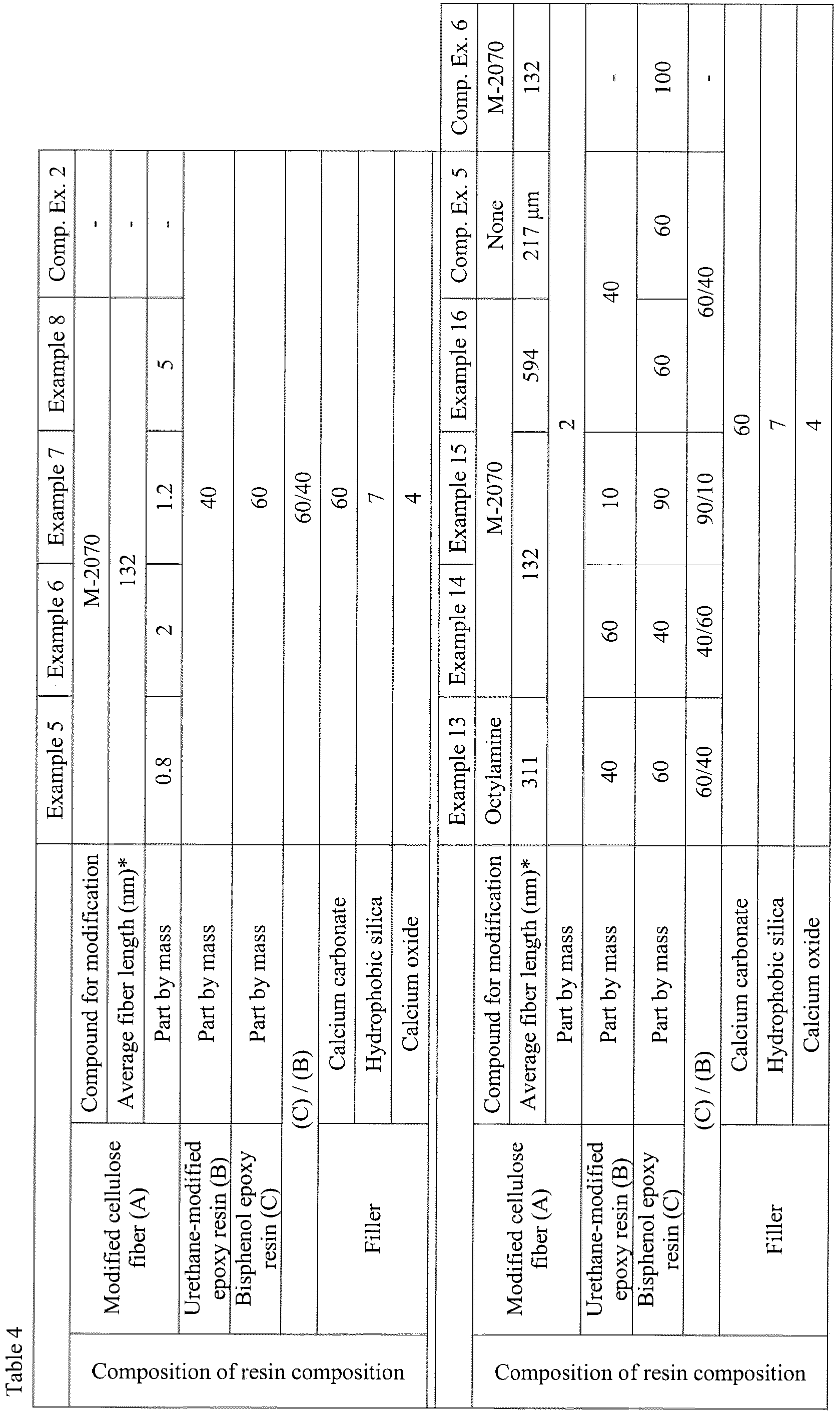

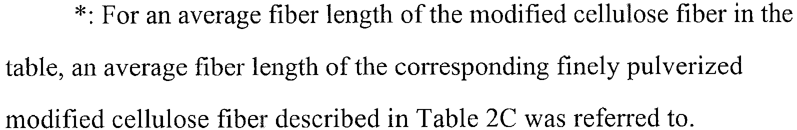

### Details of the main ingredients used in the above Production

Examples, Examples and the like are as follows.
Urethane-modified epoxy resin (manufactured by ADEKA CORPORATION, urethane-modified epoxy resin, ADEKA RESIN, EPU-1001, viscosity of 30,000 mPa·s / 25°C, epoxy equivalent of 220) Bisphenol A epoxy resin (manufactured by Mitsubishi Chemical Corporation, bisphenol A epoxy resin, jER828, viscosity of from 120 to 150 P / 25°C, epoxy equivalent of from 184 to 194; The resin is an epoxy resin other than the urethane-modified epoxy resin in Examples and the like.)
Polypropylene glycol glycidyl ether (manufactured by ADEKA CORPORATION, ADEKA GLYCIRO ED-506)

A detail of the filler used in the above Examples and the like is as follows.
Calcium carbonate (manufactured by BIHOKU FUNKA KOGYO CO.,LTD., ground calcium carbonate BF200)
Hydrophobic silica (manufactured by Cabot Specialty Chemicals Inc, TS720)
Calcium oxide (manufactured by Inoue Calcium Corporation, QC-X)

A test described in the following Test Example 1 was carried out for compositions obtained in the above Examples 1 to 16 and Comparative Examples 1 to 6. Further, a test described in the following Test Example 2 was also carried out for compositions obtained in Examples 1 to 12 and Comparative Examples 1 to 4.

### Test Example 1 - Shearing Adhesive Strength Test: Adhesion of Same Kind Materials

According to a shearing strength test method as prescribed in JASO M353, a resin composition obtained was applied to an object to be adhered, i.e. a steel sheet in a coating thickness of 0.15 mm so that an adhesion surface was a laminate of two pieces of cold-rolled steel sheets SPCC-SD (100 mm × 25 mm × 1.6 mm) of 12.5 mm. A composition that was pushed out from the steel sheet was removed, and thereafter, the steel sheet was heat-cured under the conditions of holding at 130°C for 2 hours, to produce a shearing test piece. The test piece obtained was subjected to a test with a table top model precision universal tester AGS-X manufactured by SHIMADZU CORPORATION with a distance between chucks of 111.5 cm at room temperature, 25°C, and a tensile speed of 5 mm/minute.

Here, the surface treatment method before the use of the cold-rolled steel sheets SPCC-SD as used in this test example was carried out according to a surface treatment method of test piece materials as prescribed in JASO M353, in which the steel sheets used were degreased with acetone, dried, then immersed in anti-corrosive oil WD-40, and then allowed to stand therein for 24 hours to allow degreasing.

### Test Example 2 - Tensile Test

A resin composition obtained was applied with an applicator to have thickness of 0.15 mm, and the resin composition was heat-cured under the condition of holding at 130°C for 2 hours, to produce a resin film. The resin film obtained was punched out with a dumbbell, to provide a test piece having length of 40 mm and width of 5 mm. The test piece obtained was subjected to a test according to JIS K 7127 with a tensile and compression testing machine AGS-X manufactured by SHIMADZU CORPORATION with a distance between chucks of 20 mm at room temperature, 25°C, and a tensile speed of 1 mm/minute, and elongation at break (%), maximum stress (MPa) and fracture energy (kJ/m²) were measured. Here, as the thickness of a sample, an average of 3 points of the test piece was used.

The results are shown in Table 5 and Table 6.

### [Table 5]

**Table 5**

| | | Ex. 1 | Ex. 2 | Ex. 3 | Ex. 4 | Comp. Ex. 1 | |
|---|---|---|---|---|---|---|---|
| Shearing adhesion test | Elongation at break (%) | 4.5 | 5.1 | 3.1 | 4.7 | 1.8 | |
| | Shearing adhesion strength (MPa) | 24.2 | 25.1 | 22.4 | 24.6 | 19.3 | |
| Tensile test (resin membrane) | Elongation at break (%) | 12.2 | 14.6 | 5.7 | 11.1 | 3.5 | |
| | Max stress (MPa) | 59.6 | 61.0 | 47.1 | 52.7 | 49.6 | |
| | Fracture energy (kJ/m²) | 118.0 | 143.9 | 31.7 | 95.6 | 21.4 | |

| | | Ex. 9 | Ex. 10 | Ex. 11 | Ex. 12 | Comp. Ex. 3 | Comp. Ex. 4 |
|---|---|---|---|---|---|---|---|
| Shearing adhesion test | Elongation at break (%) | 3.0 | 3.4 | 2.9 | 2.8 | 2.5 | 1.1 |
| | Shearing adhesion strength (MPa) | 20.7 | 24.2 | 20.1 | 22.1 | 21.7 | 14.1 |
| Tensile test (resin membrane) | Elongation at break (%) | 5.7 | 8.4 | 5.1 | 5.3 | 4.9 | 2.6 |
| | Max stress (MPa) | 59.3 | 55.3 | 55.4 | 60.4 | 57.8 | 49.8 |
| | Fracture energy (kJ/m²) | 61.3 | 89.4 | 49.8 | 64.6 | 47.6 | 17.1 |

When comparing the compositions containing a modified cellulose fiber (Examples 1 to 4) and the composition not containing a modified cellulose fiber (Comparative Example 1), each physical property of the resin cured products, particularly elongation was improved by allowing the resin compositions to contain a modified cellulose fiber. Further, it was found that the effects were exhibited even when changing the kinds of modifying groups (compounds for a modifying group) in the modified cellulose fiber, changing the average fiber length, or changing the ratio of resin (B) to resin (C). Since the resin compositions of the present invention have such effects, the resin compositions of the present invention could be verified to be used as a structural adhesive.

### [Table 6]

**Table 6**

| | | Ex. 5 | Ex. 6 | Ex. 7 | Ex. 8 | Comp. Ex. 2 | |
|---|---|---|---|---|---|---|---|
| Shearing adhesion test | Elongation at break (%) | 2.6 | 3.3 | 1.6 | 1.7 | 1.1 | |
| | Shearing adhesion strength (MPa) | 21.3 | 22.8 | 23.7 | 28.0 | 19.6 | |

| | | Ex. 13 | Ex. 14 | Ex. 15 | Ex. 16 | Comp. Ex. 5 | Comp. Ex. 6 |
|---|---|---|---|---|---|---|---|
| Shearing adhesion test | Elongation at break (%) | 2.0 | 2.5 | 1.9 | 1.7 | 1.5 | 1.0 |
| | Shearing adhesion strength (MPa) | 20.6 | 22.6 | 26.0 | 25.8 | 18.8 | 17.4 |

Similar effects to the effects shown in the above Examples 1 to 4 and Examples 9 to 12 could be confirmed even in compositions to which a filler was added (Examples 5 to 8 and Examples 13 to 16) from the above table.

### Production Example 11 [Production of Anionically Modified

### Cellulose Fiber 11]

Resin compositions similar to Examples 1 to 16 can be obtained even by using the anionically modified cellulose fiber 11 into which a phosphate was introduced in place of the anionically modified cellulose fiber 1 into which a carboxy group was introduced. The anionically modified cellulose fiber 11 mentioned above can be prepared by the following phosphorylation treatment.

### [Phosphorylation Treatment]

One hundred parts by mass of solid content of a needle-leaf bleached kraft pulp as a raw material natural cellulose fiber are immersed in a mixed solution of ammonium dihydrogenphosphate and urea, and the immersed pulp is squeezed to have 56 parts by mass of ammonium dihydrogenphosphate and 150 parts by mass of urea, to provide a reagent-immersed fiber.

The reagent-immersed fiber is dried with a drier at 105°C, and moisture is evaporated.

The fiber in which moisture is evaporated is heated for 4 minutes with an air drier set at 140°C.

To 100 parts by mass of the obtained fiber, 10,000 parts by mass of deionized water are added, the mixture is stirred to disperse the fiber, and thereafter, a solid content is filtered and separated by a suction filtration.

To 100 parts by mass of the solid contents in the filtered cake, 10,000 parts by mass of deionized water are added, the mixture is stirred to disperse the fiber, and thereafter, a solid content is filtered and separated by a suction filtration.

To the obtained cake, 10,000 parts by mass of deionized water are added, and 1N of aqueous sodium hydroxide solution is added in dropwise thereto while stirring the mixture, to provide a slurry having pH of from 12 to 13. Next, 0.01 M of hydrochloride is added thereto while stirring the solution, to adjust pH of the suspension to 2. Next, a solid content is filtered and separated by a suction filtration.

The obtained cake is dispersed in deionized water, and an operation of filtering and separating the cake by a suction filtration is repeated until the conductivity of a filtrate reaches 200 µS/cm or less. An anionically modified cellulose fiber 11 can be obtained by carrying out a dehydration treatment for the obtained solid content.

### INDUSTRIAL APPLICABILITY

The resin composition of the present invention can be used as a structural adhesive for a vehicle assembly product and the like.

## Claims

1. A resin composition comprising (A) a modified cellulose fiber, (B) a urethane-modified epoxy resin, and (C) an epoxy resin other than the urethane-modified epoxy resin.

2. The composition according to claim 1, wherein (A) the modified cellulose fiber has a cellulose I crystal structure, and an average fiber diameter thereof is 1 nm or more and 300 nm or less.

3. The composition according to claim 1 or 2, wherein (A) the modified cellulose fiber is an anionically modified cellulose fiber bound with a modifying group, and the modifying group is a group comprising one or more selected from the group consisting of (i) a hydrocarbon group having three or more carbon atoms, (ii) a silicone chain and (iii) an alkylene oxide chain.

4. The composition according to claim 3, wherein the modifying group is bound with the anionically modified cellulose fiber at an anionic group via an ionic bond and/or a covalent bond.

5. The composition according to any one of claims 1 to 4, wherein (C) the epoxy resin other than the urethane-modified epoxy resin is at least one selected from the group consisting of a bisphenol epoxy resin, a rubber-modified epoxy resin, an alicyclic epoxy resin, a glycidyl amine epoxy resin, a polysulfide-modified epoxy resin, a chelate-modified epoxy resin, a tris-phenol methane epoxy resin, a naphthalene epoxy resin, a dicyclopentadiene-modified epoxy resin, an epoxide of an aliphatic polyol or a derivative thereof, a polyether-modified epoxy resin, a polyfunctional aromatic epoxy resin, and a hydrogenated bisphenol epoxy resin.

6. The composition according to any one of claims 1 to 5, wherein a content of (B) the urethane-modified epoxy resin is 1% by mass or more and less than 80% by mass, and a content of (C) the epoxy resin other than the urethane-modified epoxy resin is 1% by mass or more and less than 80% by mass in the composition.

7. The composition according to any one of claims 1 to 6, wherein the composition is obtained by mixing a mixture of (A) the modified cellulose fiber and (B) the urethane-modified epoxy resin, and (C) the epoxy resin other than the urethane-modified epoxy resin.

8. The composition according to any one of claims 1 to 6, wherein the composition is obtained by mixing a mixture of (B) the urethane-modified epoxy resin and (C) the epoxy resin other than the urethane-modified epoxy resin, and (A) the modified cellulose fiber.

9. The composition according to any one of claims 1 to 6, wherein the composition is obtained by mixing a mixture of (A) the modified cellulose fiber and (C) the epoxy resin other than the urethane-modified epoxy resin, and (B) the urethane-modified epoxy resin.

10. An adhesive comprising a composition as defined in any one of claims 1 to 9.

11. The adhesive according to claim 10, wherein the adhesive is a structural adhesive.

12. The adhesive according to claim 10 or 11, further comprising a filler other than (A) a modified cellulose fiber.

13. The adhesive according to any one of claims 10 to 12, wherein the adhesive is used for adhering a vehicle assembly product.

14. A method of adhering a vehicle assembly product, comprising adhering the vehicle assembly product using an adhesive as defined in any one of claims 10 to 13.

15. A method of producing a resin composition comprising (B) a urethane-modified epoxy resin and (C) an epoxy resin other than the urethane-modified epoxy resin, having:
Step 1: mixing (A) a modified cellulose fiber and (B) the urethane-modified epoxy resin, and
Step 2: mixing the mixture obtained in step 1 and (C) the epoxy resin other than the urethane-modified epoxy resin.

16. A method of producing a resin composition comprising (B) a urethane-modified epoxy resin and (C) an epoxy resin other than the urethane-modified epoxy resin, having the following step 3 or step 4:
Step 3: mixing (A) a modified cellulose fiber, (B) the urethane-modified epoxy resin and (C) the epoxy resin other than the urethane-modified epoxy resin, or
Step 4: mixing (B) the urethane-modified epoxy resin and (C) the epoxy resin other than the urethane-modified epoxy resin (step 4-1), and mixing the resulting composition and (A) the modified cellulose fiber (step 4-2).

17. A method of producing a resin composition comprising (B) a urethane-modified epoxy resin and (C) an epoxy resin other than the urethane-modified epoxy resin, having:
Step 5: mixing (A) a modified cellulose fiber and (C) the epoxy resin other than the urethane-modified epoxy resin, and
Step 6: mixing a composition obtained in step 5 and (B) the urethane-modified epoxy resin.

18. A method of improving elongation at break of a structural adhesive, comprising mixing (A) a modified cellulose fiber and (B) a urethane-modified epoxy resin.

19. An adhesive kit comprising a container comprising an adhesive as defined in any one of claims 10 to 13.

20. An adhesive kit comprising
a first container comprising a composition as defined in any one of claims 1 to 9, and
a second container comprising a curing agent.
